(19) Europäisches Patentamt
European Patent Office
Office européen des brevets

(11) **EP 4 661 351 A1**

(12) **EUROPEAN PATENT APPLICATION**
published in accordance with Art. 153(4) EPC

(43) Date of publication:
**10.12.2025 Bulletin 2025/50**

(21) Application number: **23926317.1**

(22) Date of filing: **09.03.2023**

(51) International Patent Classification (IPC):
***H04L 27/38*** (2006.01)

(52) Cooperative Patent Classification (CPC):
**H04L 27/38; H04L 1/0016**

(86) International application number:
**PCT/JP2023/008945**

(87) International publication number:
**WO 2024/185107 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Mitsubishi Electric Corporation
Chiyoda-ku
Tokyo 100-8310 (JP)**

(72) Inventor: **YOSHIDA, Tsuyoshi
Tokyo 100-8310 (JP)**

(74) Representative: **Plasseraud IP
104 Rue de Richelieu
CS92104
75080 Paris Cedex 02 (FR)**

(54) **PROBABILISTIC SHAPING DECODING CIRCUIT AND PROBABILISTIC SHAPING DECODING METHOD**

(57) A probabilistic shaping decoding circuit (5) includes: with x, m, and n[x] being natural numbers (m = 1, 2, ..., n[x]), a (2m-1)-th lookup table (51) of a layer x to restore a (2m-1)-th reception address bit string of the layer x and a (2m-1)-th reception information bit string of the layer x which is a part of an information bit sequence of a communication target from a (2m-1)-th reception shaping bit string of the layer x; a 2m-th lookup table (52) of the layer x to restore a 2m-th reception address bit string of the layer x and a 2m-th reception information bit string of the layer x which is a part of the information bit sequence of the communication target from a 2m-th reception shaping bit string of the layer x; an m-th address conversion lookup table (53) of the layer x to convert the (2m-1)-th reception address bit string of the layer x into a (2m-1)-th post-conversion reception address bit string of the layer x corresponding to an offset value added to the 2m-th reception address bit string of the layer x; an m-th adder (54) of the layer x to add the (2m-1)-th post-conversion reception address bit string of the layer x and the 2m-th reception address bit string of the layer x and output a bit string indicating an addition result as an m-th reception shaping bit string of a layer x + 1; and an m-th lookup table (55) of the layer x + 1 to restore an m-th reception address bit string of the layer x + 1 and an m-th reception information bit string of the layer x which is a part of the information bit sequence of the communication target from the m-th reception shaping bit string of the layer x + 1. A reception shaping bit string input to each of the lookup tables corresponds to designation information designating a combination of signal point groups in a signal space managed by each of the lookup tables or signal point information indicating a signal point arrangement of the signal space.

FIG. 10

## Description

TECHNICAL FIELD

The present disclosure relates to a probabilistic shaping decoding circuit and a probabilistic shaping decoding method.

BACKGROUND ART

In order to implement a high throughput in optical communication, for example, it is effective to increase a modulation multilevel degree. When the modulation multilevel degree is increased, it is usual that quadrature amplitude modulation (hereinafter, referred to as QAM) is performed on a transmission side of signal communication and coherent detection and digital signal processing are performed on a reception side.

On the other hand, when the number of bits placed on the QAM signal is increased, the number of signal points is also increased, and the minimum distance between the signal points with respect to the average power of the signal is reduced. This increases the signal-to-noise ratio (hereinafter, referred to as SNR) required to obtain constant communication quality and limits the applicable transmission conditions.

In optical communication, there are many cases where an allowable value of an error rate is very small, and it is normal to perform error correction in a high-end device. Particularly, when performance is emphasized, soft decision error correction is used. A combination of multi-valued QAM and soft decision error correction has been studied so far, and a combination of probabilistic shaping is further studied.

Techniques for shaping an arrangement of signal points include geometric shaping for shaping the position of each of a plurality of signal points and probabilistic shaping for shaping the probability that each of the plurality of signal points can take. In any case, it is possible to asymptotically bring the relationship of the transmission capacity with respect to the SNR to a Shannon limit. This contributes, for example, to increasing the communication capacity of a client signal under a given transmission condition.

Among them, when a symbol to which probabilistic shaping for improving the performance by giving a bias to the occurrence probability of each signal point is applied is input to a communication path, encoding processing corresponding to the probabilistic shaping is required. For example, Patent Literature 1 discloses a probabilistic shaping encoding technique based on hierarchical distribution matching, and it is assumed that the encoding processing by the probabilistic shaping encoding technique is performed on the transmission side of signal communication.

In a case where the encoding processing is performed on the transmission side of the signal communication, it is necessary to perform decoding processing paired with the encoding processing on the reception side of the signal communication. Accordingly, Patent Literature 1 also discloses a probabilistic shaping decoding technique that is a pair of probabilistic shaping encoding techniques.

A circuit (hereinafter, also referred to as a "conventional circuit") using the probabilistic shaping decoding technique described in Patent Literature 1 converts a bit string (reception shaping bit string) corresponding to a shaped reception symbol string into a reception information bit string using a lookup table (LUT) arranged in a hierarchy on the assumption that the above encoding processing is performed on the transmission side of signal communication. In a case where a single LUT is used, the circuit scale of the LUT exponentially increases as the number of input/output bits of the LUT increases, but dividing of the LUT is possible in the conventional circuit. Thus, in the conventional circuit, it is possible to reduce the circuit scale by suppressing the number of input/output bits of each LUT while increasing the number of input/output bits (block length) of the entire circuit to achieve high performance.

CITATION LIST

PATENT LITERATURES

Patent Literature 1: Japanese Patent No. 6820131

SUMMARY OF INVENTION

TECHNICAL PROBLEM

However, in the conventional circuit, when the number of input/output bits of each divided LUT is small, performance degradation occurs in probabilistic distribution shaping.

For example, in the above-described conventional circuit, in a case where the number of input/output bits of each LUT is small, the relationship of the transmission capacitance with respect to the predetermined SNR deviates from the Shannon limit, or the SNR necessary for implementing the predetermined transmission capacitance increases. In order to prevent such performance deterioration, it is necessary to increase the number of input/output bits of each LUT, but there is a problem that the circuit scale increases when the number of input/output bits of each LUT is increased.

The present disclosure has been made to solve the above problems, and an object of the present disclosure is to obtain a probabilistic shaping decoding circuit in which the circuit scale is reduced while performance degradation is suppressed with respect to a conventional circuit.

SOLUTION TO PROBLEM

A probabilistic shaping decoding circuit according to the present disclosure includes: with x, m, and n[x] being natural numbers (m = 1, 2, ..., n[x]), a (2m-1)-th lookup table of a layer x to restore a (2m-1)-th reception address bit string of the layer x and a (2m-1)-th reception information bit string of the layer x which is a part of an information bit sequence of a communication target from a (2m-1)-th reception shaping bit string of the layer x; a 2m-th lookup table of the layer x to restore a 2m-th reception address bit string of the layer x and a 2m-th reception information bit string of the layer x which is a part of the information bit sequence of the communication target from a 2m-th reception shaping bit string of the layer x; an m-th address conversion lookup table of the layer x to convert the (2m-1)-th reception address bit string of the layer x into a (2m-1)-th post-conversion reception address bit string of the layer x corresponding to an offset value added to the 2m-th reception address bit string of the layer x; an m-th adder of the layer x to add the (2m-1)-th post-conversion reception address bit string of the layer x and the 2m-th reception address bit string of the layer x and output a bit string indicating an addition result as an m-th reception shaping bit string of a layer x + 1; and an m-th lookup table of the layer x + 1 to restore an m-th reception address bit string of the layer x + 1 and an m-th reception information bit string of the layer x which is a part of the information bit sequence of the communication target from the m-th reception shaping bit string of the layer x + 1, in which each of the lookup tables is hierarchized in a tree shape, and a reception shaping bit string input to each of the lookup tables corresponds to designation information designating a combination of signal point groups in a signal space managed by each of the lookup tables or signal point information indicating a signal point arrangement of the signal space.

ADVANTAGEOUS EFFECTS OF INVENTION

According to the present disclosure, it is possible to obtain a probabilistic shaping decoding circuit in which a circuit scale is reduced while performance degradation is suppressed as compared with a conventional circuit.

BRIEF DESCRIPTION OF DRAWINGS

FIG. 1 is a block diagram illustrating a configuration of a probabilistic shaping encoding circuit according to a first embodiment.
FIG. 2 is a diagram extracting and illustrating a circuit configuration between a (x + 1)-th layer and an x-th layer immediately below the (x + 1)-th layer as a representative example in the probabilistic shaping encoding circuit illustrated in FIG. 1.
FIG. 3A and FIG. 3B are diagrams illustrating an example of processing by a distribution circuit in the first embodiment.
FIG. 4 is a diagram illustrating an example of processing by a distribution circuit in the first embodiment.
FIG. 5 is a diagram illustrating an example of an algorithm describing processing by an address replacing circuit in the probabilistic shaping encoding circuit according to the first embodiment.
FIG. 6A and FIG. 6B are diagrams for describing an effect of the probabilistic shaping encoding circuit according to the first embodiment, FIG. 6A is a diagram illustrating a configuration example of a conventional probabilistic shaping encoding circuit, and FIG. 6B is a diagram illustrating a configuration example of a probabilistic shaping encoding circuit according to the first embodiment.
FIG. 7 is a flowchart illustrating an operation example of the probabilistic shaping encoding circuit according to the first embodiment.
FIG. 8A is a block diagram illustrating a hardware configuration for implementing functions of the probabilistic shaping encoding circuit, and FIG. 8B is a block diagram illustrating a hardware configuration for executing software for implementing the functions of the probabilistic shaping encoding circuit.
FIG. 9 is a block diagram illustrating a configuration of a probabilistic shaping decoding circuit according to the first embodiment.
FIG. 10 is a diagram extracting and illustrating a circuit configuration between a (x + 1)-th layer and an x-th layer immediately below the (x + 1)-th layer as a representative example in the probabilistic shaping decoding circuit illustrated in FIG. 9.
FIG. 11A and FIG. 11B are diagrams for describing an effect of the probabilistic shaping decoding circuit according to the first embodiment, FIG. 11A is a diagram illustrating a configuration example of a conventional probabilistic shaping decoding circuit, and FIG. 11B is a diagram illustrating a configuration example of the probabilistic shaping decoding circuit according to the first embodiment.
FIG. 12 is a flowchart illustrating an operation example of the probabilistic shaping decoding circuit according to the first embodiment.
FIG. 13A is a block diagram illustrating a hardware configuration for implementing functions of the probabilistic shaping decoding circuit, and FIG. 13B is a block diagram illustrating a hardware configuration for executing software for implementing the functions of the probabilistic shaping decoding circuit.
FIG. 14 is a block diagram illustrating a configuration of a probabilistic shaping decoding circuit according to a second embodiment, and is a diagram extracting and illustrating a circuit configuration between a (x + 1)-th layer and an x-th layer immediately below the (x + 1)-th layer as a representative example.

FIG. 15 is a diagram illustrating an example of an algorithm describing processing by an address replacing circuit in a probabilistic shaping decoding circuit in the second embodiment.

DESCRIPTION OF EMBODIMENTS

Hereinafter, embodiments of the present disclosure will be described in detail with reference to the drawings. Hereinafter, first, a probabilistic shaping encoding circuit that performs encoding processing by the above-described probabilistic shaping encoding technique will be described, and next, a probabilistic shaping decoding circuit that performs decoding processing paired with the encoding processing will be described.

First Embodiment

<Probabilistic shaping encoding circuit 1>

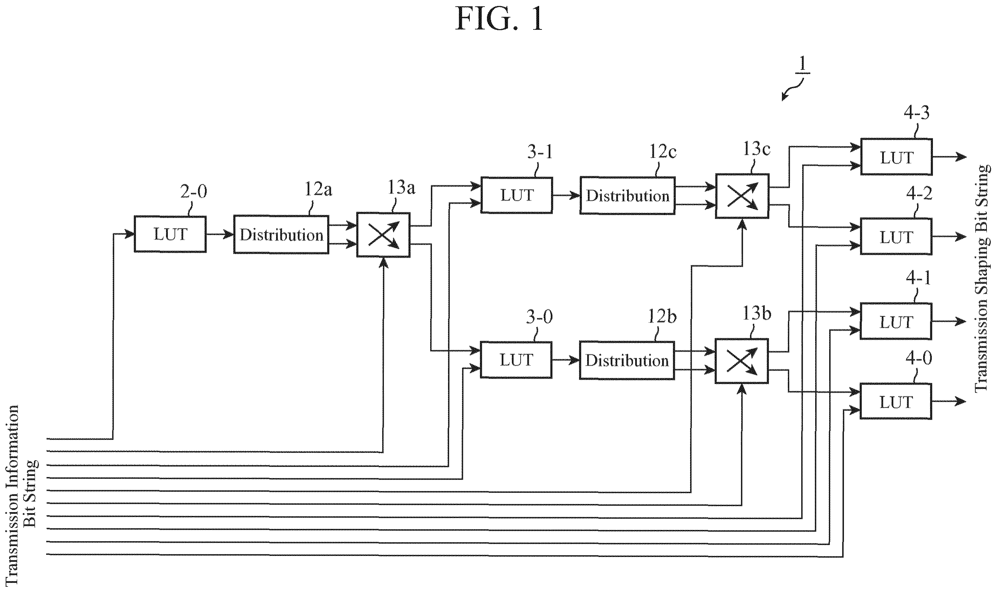

FIG. 1 is a block diagram illustrating a configuration of a probabilistic shaping encoding circuit 1 according to a first embodiment. The probabilistic shaping encoding circuit 1 is provided in, for example, an optical transmission device, and generates (encodes) a probabilistic distribution shaping signal in optical modulation of a transmission signal performed by the optical transmission device.

The probabilistic shaping encoding circuit 1 is configured on the premise of a circuit based on a lookup table (LUT) group arranged in a hierarchical manner in the conventional circuit described above, and has a configuration in which a distribution circuit and an address replacing circuit are additionally provided between the LUTs arranged in the hierarchical manner.

For example, as illustrated in FIG. 1, the probabilistic shaping encoding circuit 1 includes an LUT group hierarchized in a tree shape, that is, an LUT 2-0, an LUT 3-0, an LUT 3-1, an LUT 4-0, an LUT 4-1, an LUT 4-2, and an LUT 4-3, and a distribution circuit 12 (12a, 12b, and 12c) and an address replacing circuit 13 (13a, 13b, and 13c) provided between these LUTs. Data associated with an address is registered in each of these LUTs.

FIG. 1 illustrates a probabilistic shaping encoding circuit 1 having three-layer tree-like hierarchical LUTs. Here, the number of layers of the LUT may be two layers or less or four layers or more. The LUT 2-0 is an LUT of the second layer which is the uppermost layer. The LUT 3-0 and the LUT 3-1 are LUTs of the first layer which is an intermediate layer, and the LUT 3-0 and the LUT 3-1 of the layer immediately below are connected to the LUT 2-0 via the distribution circuit 12a and the address replacing circuit 13a.

The LUT 4-0, the LUT 4-1, the LUT 4-2, and the LUT 4-3 are LUTs of a 0-th layer which is the lowermost layer. The LUT 4-0 and the LUT 4-1 of the layer immediately below are connected to the LUT 3-0 via the distribution circuit 12b and the address replacing circuit 13b, and the LUT 4-2 and the LUT 4-3 of the layer immediately below are connected to the LUT 3-1 via the distribution circuit 12c and the address replacing circuit 13c.

Each of the LUT 2-0, the LUT 3-0, the LUT 3-1, the LUT 4-0, the LUT 4-1, the LUT 4-2, and the LUT 4-3 manages a signal space. For example, the signal space managed by the LUT 4-0 is a space (S0) of two QAM signals, the signal space managed by the LUT 4-1 is a space (S1) of another two QAM signals, the signal space managed by the LUT 4-2 is a space (S2) of still another two QAM signals, and the signal space managed by the LUT 4-3 is a space (S3) of yet another two QAM signals. At this time, the signal spaces managed by the LUT 3-0 are the signal spaces S0 and S1 managed by the LUT 4-0 and the LUT 4-1, and the signal spaces managed by the LUT 3-1 are the signal spaces S2 and S3 managed by the LUT 4-2 and the LUT 4-3. The signal spaces managed by the LUT 2-0 are signal spaces S0, S1, S2, and S3 managed by the LUT 3-0 and the LUT 3-1. The signal point is a point of a complex amplitude value in a constellation diagram.

A part of a transmission information bit string as external input information is input to each of the LUT 2-0, the LUT 3-0, the LUT 3-1, the LUT 4-0, the LUT 4-1, the LUT 4-2, and the LUT 4-3. Further, some bits of the transmission information bit string are input as transmission address replacing bits to the address replacing circuit 13 (13a, 13b, and 13c). The transmission information bit string as external input information is an information bit sequence as a communication target, and is input from the outside to the probabilistic shaping encoding circuit 1 as a client signal or a framed signal. In one clock cycle, the total value of the number of bits of the transmission information bit string is a number represented by any positive integer. The clock cycle is, for example, 2 nanoseconds when an operation frequency of a logic circuit is 500 MHz. The number of input bits to each LUT is any integer of 0 or more.

The LUT 2-0 of the second layer, which is the uppermost layer, converts a part of the transmission information bit string into a transmission shaping bit string, and outputs the transmission shaping bit string obtained by the conversion to the distribution circuit 12a of the first layer, which is the layer immediately below. The transmission shaping bit string is an information bit string for generating designation information designating a combination of signal point groups in the signal space managed by the LUT 3-0 and the LUT 3-1 of the first layer. This conversion processing is performed by table reference (table drawing). Note that the table reference is processing in which a relationship between an address and data is stored in advance, and when an address is designated, data corresponding to the address is read. An input to the LUT corresponds to an address of the LUT, and an output from the LUT corresponds to data of the LUT. The relationship between the address and the data usually has a one-to-one correspondence.

The distribution circuit 12a of the first layer converts the transmission shaping bit string into a combination of a first transmission source address bit string and a second transmission source address bit string, and outputs each bit string obtained by the conversion to the address replacing circuit 13a of the first layer. The first transmission source address bit string and the second transmission source address bit string are information bit strings serving as designation information for designating a combination of signal point groups in the signal spaces managed by the LUT 3-0 and the LUT 3-1 of the first layer.

The address replacing circuit 13a of the first layer performs processing according to the value of the transmission address replacing bit on the first transmission source address bit string and the second transmission source address bit string to obtain a first transmission address bit string and a second transmission address bit string. The address replacing circuit 13a of the first layer outputs the obtained first transmission address bit string to the LUT 3-1 of the first layer and outputs the second transmission address bit string to the LUT 3-0 of the first layer.

The LUT 3-0 of the first layer converts a bit sequence including a part of the transmission information bit string as the external input information and the second transmission address bit string from the address replacing circuit 13a of the first layer into a transmission shaping bit string, and outputs the transmission shaping bit string obtained by the conversion to the distribution circuit 12b of the 0-th layer which is the layer immediately below. The transmission shaping bit string is an information bit string for generating designation information designating the combination of the signal point groups in the signal space managed by the LUT 4-0 and the LUT 4-1 of the 0-th layer which is the layer immediately below.

The distribution circuit 12b of the 0-th layer converts the transmission shaping bit string into a combination of the first transmission source address bit string and the second transmission source address bit string, and outputs each bit string obtained by the conversion to the address replacing circuit 13b of the 0-th layer. The first transmission source address bit string and the second transmission source address bit string are information bit strings serving as designation information for designating a combination of signal point groups in the signal spaces managed by the LUT 4-0 and the LUT 4-1 of the 0-th layer.

The address replacing circuit 13b of the 0-th layer performs processing according to the value of the transmission address replacing bit on the first transmission source address bit string and the second transmission source address bit string to obtain a first transmission address bit string and a second transmission address bit string. The address replacing circuit 13b of the 0-th layer outputs the obtained first transmission address bit string to the LUT 4-1 of the 0-th layer and outputs the second transmission address bit string to the LUT 4-0 of the 0-th layer.

The LUT 3-1 of the first layer basically operates similarly to the LUT 3-0 of the first layer. Further, the distribution circuit 12c and the address replacing circuit 13c of the 0-th layer following the LUT 3-1 of the first layer basically operate similarly to the distribution circuit 12b and the address replacing circuit 13b of the 0-th layer following the LUT 3-0 of the first layer described above.

The LUT 4-0 and the LUT 4-1 of the 0-th layer which is the lowest layer convert a bit sequence including a part of the transmission information bit string as the external input information and the second transmission address bit string from the address replacing circuit 13b of the 0-th layer into signal point information indicating a signal point arrangement of the signal spaces managed by the LUT 4-0 and the LUT 4-1, and output the signal point information to the outside. The LUT 4-2 and the LUT 4-3 convert a bit sequence including a part of the transmission information bit string as the external input information and the first transmission address bit string from the 0-th layer address replacing circuit 13c into signal point information indicating a signal point arrangement of the signal spaces managed by the LUT 4-2 and the LUT 4-3, and output the signal point information to the outside.

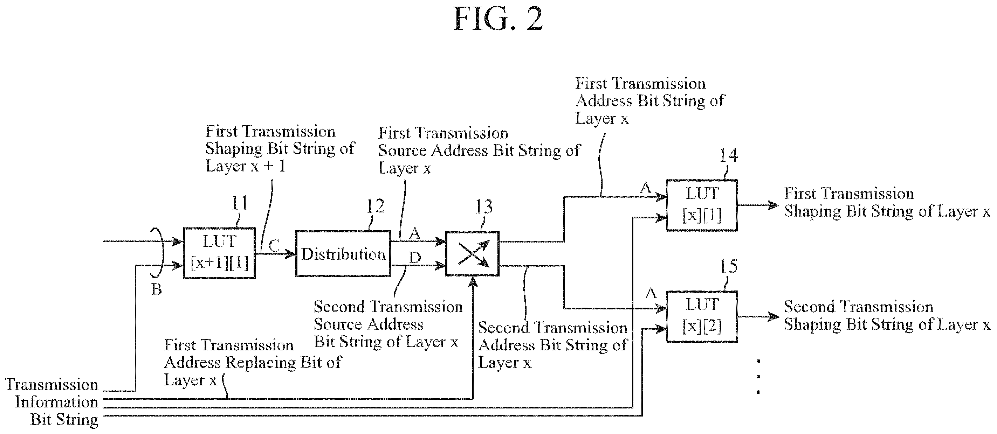

FIG. 2 is a diagram extracting and illustrating a circuit configuration between a (x + 1)-th layer and an x-th layer immediately below the (x + 1)-th layer as a representative example in the probabilistic shaping encoding circuit 1 illustrated in FIG. 1. Note that, in the following description, for convenience of description, the (x + 1)-th layer is denoted as a "layer x + 1", and the x-th layer is denoted as a "layer x". Further, in FIG. 2, the LUTs illustrated in FIG. 1 are generalized in a form independent of the layer, and the LUTs are denoted by reference numerals 11, 14, and 15.

Further, in FIG. 2, a first LUT 11 of the layer x + 1 is denoted as LUT [x + 1][1], a first LUT 14 of the layer x is denoted as LUT [x][1], and a second LUT 15 of the layer x is denoted as LUT [x][2]. Further, in FIG. 2, the number of bits of the input/output bit string in each of the first LUT 11, the distribution circuit 12, and the address replacing circuit 13 of the layer x + 1 is represented by symbols A to D (all are non-negative integers). At this time, among the respective numbers of bits, relationships of $C > B$, $A \geq D$, and $A + D \geq B$ are established.

<First LUT 11 of layer x + 1>

The first LUT 11 of the layer x + 1 receives a first transmission bit string (the number of bits: B) of the layer x + 1 from the outside (not illustrated) as an input, and outputs a first transmission shaping bit string (the number of bits: C) of the layer x + 1. Specifically, the first LUT 11 of the layer x + 1 converts the input first transmission bit string of the layer x + 1 into the first transmission shaping bit string of the layer x + 1 by referring to the table, and outputs the first transmission shaping bit string.

Here, the first transmission bit string of the layer x + 1 to be an input includes, for example, a first transmission address bit string of the layer x + 1 from the outside (not illustrated) and a first transmission information bit string of the layer x + 1 from the outside (not illustrated). Here, the first transmission address bit string of the layer x + 1 is 0 when the layer x + 1 is the uppermost layer.

Further, when the layer x + 1 is an intermediate layer from immediately below the uppermost layer to immediately above the lowermost layer, the first transmission address bit string of the layer x + 1 is a bit string output from the address replacing circuit 13 in the previous stage of the first LUT 11 of the layer x + 1.

<First distribution circuit 12 of layer x>

The first distribution circuit 12 of the layer x receives the first transmission shaping bit string (the number of bits: C) of the layer x + 1 output from the first LUT 11 of the layer x + 1 as an input, and outputs the first transmission source address bit string (the number of bits: A) of the layer x and the second transmission source address bit string (the number of bits: D) of the layer

x.

Specifically, the first distribution circuit 12 of the layer x converts the input first transmission shaping bit string of the layer x + 1 into a combination of the first transmission source address bit string of the layer x and the second transmission source address bit string of the layer x by referring to the table, and outputs each bit string obtained by the conversion.

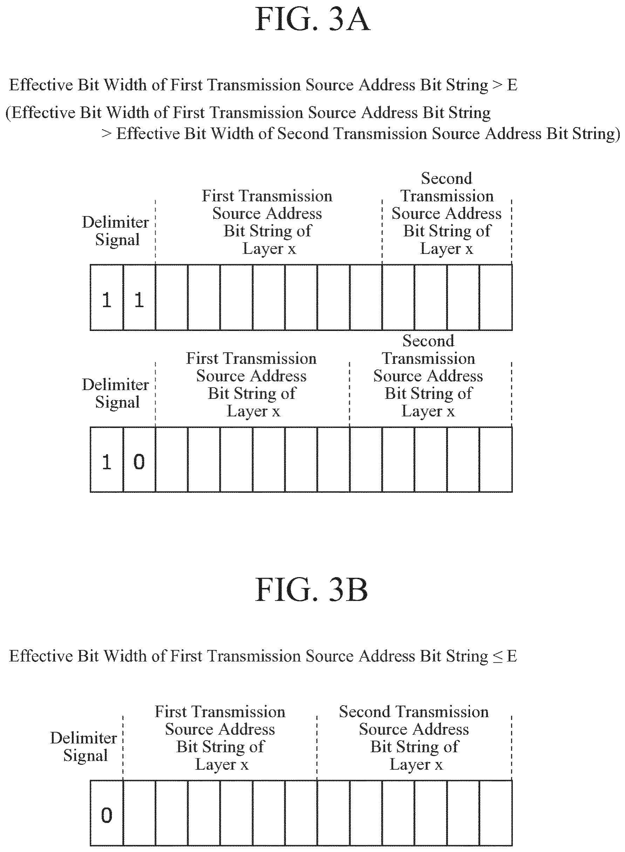

Here, an example of processing by the first distribution circuit 12 of the layer x will be described with reference to FIG. 3. For example, as illustrated in FIGS. 3A and 3B, the first distribution circuit 12 of the layer x sets the first bit or the 1 to 2 bit of the input first transmission shaping bit string of the layer x + 1 as a delimiter signal, and changes the manner of conversion according to the value of the delimiter signal.

Further, at this time, the distribution circuit 12 performs the conversion in such a manner that the magnitude relationship between the value indicated by the first transmission source address bit string of the layer x and the value indicated by the second transmission source address bit string of the layer x obtained by the conversion is one of (a) a case where the values are even values equal to each other, or (b) a case where the values are different from each other, and the value indicated by the first transmission source address bit string of the layer x is larger than the value indicated by the second transmission source address bit string of the layer x.

As an example, for example, it is assumed that the number of bits of the first transmission shaping bit string of the layer x + 1 input to the distribution circuit 12 is 13 bits (C = 13).

<Case 0>

In this case, when the first bit of the input first transmission shaping bit string of the layer x + 1 is "0", as illustrated in FIG. 3B, the distribution circuit 12 allocates the 12 bits from the second bit to the 13th bit following "0" to six bits at a time. That is, the distribution circuit 12 sets six bits from the 2nd bit to the 7th bit of the first transmission shaping bit string of the layer x + 1 as the first transmission source address bit string of the layer x, and sets six bits from the 8th bit to the 13th bit as the second transmission source address bit string of the layer x. In this case, since the above-described six bits are the first transmission source address bit string of the layer x, the effective bit width of the first transmission source address bit string is equal to or less than 6 (= E). Hereinafter, this case is also referred to as a "case 0".

<Case 1>

Further, when the first bit of the input first transmission shaping bit string of the layer x + 1 is "1", the distribution circuit 12 refers to the second bit following "1" as illustrated in FIG. 3A. When the second bit is "0", the distribution circuit 12 allocates 11 bits from the third bit to the 13th bit following "0" to six bits and five bits. That is, the distribution circuit 12 sets six bits from the 3rd bit to the 8th bit of the first transmission shaping bit string of the layer x + 1 as the first transmission source address bit string of the layer x, and sets five bits from the 9th bit to the 13th bit as the second transmission source address bit string of the layer x.

Further, in this case, the distribution circuit 12 newly adds "1" as the seventh bit to the left of the most significant bit (sixth bit) of the first transmission source address bit string of the layer x, and outputs the obtained first transmission source address bit string. This is synonymous with adding an offset value "64" to the address determined by the first transmission source address bit string of the layer x. Note that, in this case, since the first transmission source address bit string of the layer x is seven bits, the effective bit width of the bit string is larger than 6 (= E). Hereinafter, this case is also referred to as a "case 1".

<Case 2>

On the other hand, if the value of the second bit following "1" of the first bit is "1", the distribution circuit 12 allocates the 11 bits from the third bit to the 13th bit following "1" to seven bits and four bits. That is, the distribution circuit 12 sets seven bits from the 3rd bit to the 9th bit of the first transmission shaping bit string of the layer x + 1 as the first transmission source address bit string of the layer x, and sets four bits from the 10th bit to the 13th bit as the second transmission source address bit string of the layer x.

Further, in this case, the distribution circuit 12 newly adds "1" as the 8th bit to the left of the most significant bit (7th bit) of the first transmission source address bit string of the layer x, and outputs the obtained first transmission source address bit string. This is synonymous with adding the offset value "128" to the address determined by the first transmission source address bit string of the layer x. Note that, in this case, since the first transmission source address bit string of the layer x is eight bits, the effective bit width of the bit string is larger than 6 (= E). Hereinafter, this case is also referred to as a "case 2".

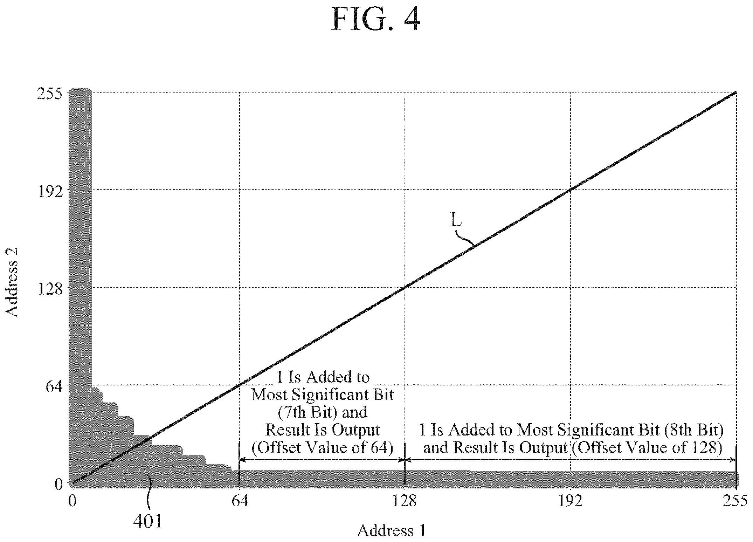

Here, the processing by the first distribution circuit 12 of the layer x will be supplemented with reference to FIG. 4. FIG. 4 is a graph in which the signal point arrangement defined by the signal point information is expressed by a combination of a first address (Address1) and a second address (Address2). In FIG. 4, the horizontal axis represents a first address, and the vertical axis represents a second address. For example, when each of the first address and the second address is expressed by eight bits, the signal point information indicating one signal point arrangement is expressed by 16 bits (= 8 + 8). Further, in this case, the number of possible addresses for one signal point arrangement is 65536 (= $2^{16}$) in total.

Further, a straight line L illustrated in FIG. 4 illustrates signal point arrangement in a case where the first address and the second address are equal. For example, among the signal point arrangements on the straight line L, a signal point arrangement in which both the first address and the second address are "2" is expressed as "0000001000000010", and a signal point arrangement in which both the first address and the second address are "8" is expressed as "0000100000001000".

Among these, the probabilistic shaping encoding circuit 1 uses, for example, 4096 signal point arrangements that are considered to include a large number of "0" in the signal point information as signal points having relatively small power. 4096 ways in this case correspond to, for example, a signal point arrangement of a gray portion indicated by reference numeral 401 in FIG. 4. Note that the signal point arrangement indicated by reference numeral 401 can be expressed by 12 bits.

At this time, as described above, the distribution circuit 12 performs the conversion in such a manner that the magnitude relationship between the value indicated by the first transmission source address bit string of the layer x and the value indicated by the second transmission source address bit string of the layer x obtained by the conversion is one of (a) a case where the values are even values equal to each other, or (b) a case where the values are different from each other, and the value indicated by the first transmission source address bit string of the layer x is larger than the value indicated by the second transmission source address bit string of the layer x.

Here, the signal point arrangement in the case where the relationship between the two values is (a) is located on a straight line L exactly in the gray portion indicated by reference numeral 401. In this case, the signal point arrangement is expressed as, for example, "0000001000000010" corresponding to a case where the first address and the second address have even values "2" equal to each other, "0000100000001000" corresponding to a case where the first address and the second address have even values "8" equal to each other, or the like.

Further, the signal point arrangement in the case where the relationship between the two values is (b) is located exactly in the gray portion indicated by reference numeral 401 and in a portion on the right side (closer to the horizontal axis) of the straight line L. In this case, the signal point arrangement is expressed as, for example, "0000001100000001" corresponding to a case where the first address is "3" and the second address is "1", "0000011100000001" corresponding to a case where the first address is "7" and the second address is "1", or the like.

That is, the distribution circuit 12 performs the conversion in such a manner as to correspond to the above (a) or (b), thereby determining the signal point arrangement in such a manner as to be located at least on the straight line L within the gray portion indicated by reference numeral 401 or on the right side (close to the horizontal axis) of the straight line L. Furthermore, the distribution circuit 12 employs the concept of the offset value described above in order to improve the efficiency in determining the signal point arrangement as described above.

For example, when the range of the first address is "0" to "63", that is, when the effective bit width of the first address is equal to or less than 6 (case 0 described above), the distribution circuit 12 does not use the offset value. On the other hand, when the range of the first address is "64" to "127", that is, when the effective bit width of the first address is larger than 6 and corresponds to Case 1 described above, the distribution circuit 12 newly adds "1" as the 7th bit to the left of the most significant bit (6th bit) of the first transmission source address bit string of the layer x, and outputs the obtained first transmission source address bit string. This is synonymous with adding the offset value "64" to a value that can be expressed by the first transmission source address bit string (six bits) of the layer x.

Further, when the range of the first address is "128" to "255", that is, when the effective bit width of the first address is larger than 6 and corresponds to Case 2 described above, the distribution circuit 12 newly adds "1" as the 8th bit to the left of the most significant bit (7 bits) of the first transmission source address bit string (seven bits) of the layer x, and outputs the obtained first transmission source address bit string. This is synonymous with adding the offset value "128" to a value that can be expressed by the first transmission source address bit string (six bits) of the layer x.

As described above, the distribution circuit 12 can reduce the number of bits to be processed at the time of conversion by employing the idea of the offset value to newly add "1" after conversion. Further, this also leads to a reduction in the number of bits of the first transmission shaping bit string of the layer x + 1 input from the first LUT 11 of the layer x + 1 to the distribution circuit 12.

<First address replacing circuit 13 of Layer x>

The first address replacing circuit 13 of the layer x receives the first transmission source address bit string (bit number: A) of the layer x and the second transmission source address bit string (bit number: D) of the layer x, which are output from the first distribution circuit 12 of the layer x, and a first transmission address replacing bit of the layer x from the outside (not illustrated) as an input, and outputs the first transmission address bit string (bit number: A at the maximum) of the layer x and the second transmission address bit string (bit number: A at the maximum) of the layer x.

Specifically, the first address replacing circuit 13 of the layer x performs processing according to the value of the first transmission address replacing bit of the layer x on the first transmission source address bit string of the layer x and the second transmission source address bit string of the layer x to obtain the first transmission address bit string of the layer x and the second transmission address bit string of the layer x. The address replacing circuit 13 outputs each obtained bit string. Note that the first transmission address replacing bits of the layer x are some bits of a transmission information bit string from the outside.

Hereinafter, a specific example of processing by the address replacing circuit 13 will be described. As described above, there are two types of magnitude relationships between the value indicated by the first transmission source address bit string of the layer x and the value indicated by the second transmission source address bit string of the layer x input to the address replacing circuit 13: (a) a case where the values are even values equal to each other; and (b) a case where the values are different from each other, and the value indicated by the first transmission source address bit string of the layer x is larger than the value indicated by the second transmission source address bit string of the layer x. Further, the first address replacing bit (hereinafter, also simply referred to as a "replacing bit") of the layer x input to the address replacing circuit 13 has two types of bits of "0" and "1".

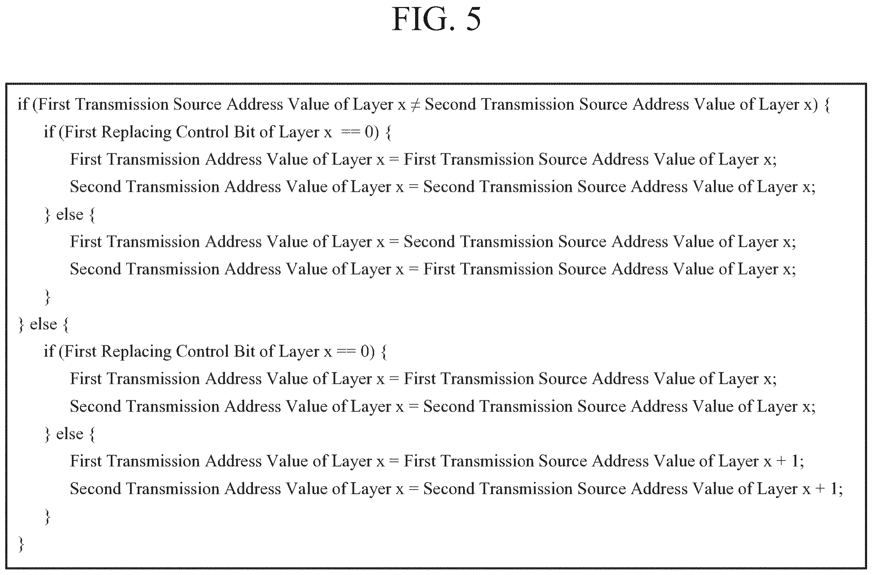

Accordingly, the address replacing circuit 13 performs processing according to the following four cases. Note that FIG. 5 illustrates an example of an algorithm describing processing in the following four cases.

(1) Case A; the magnitude relationship is (a), and the replacing bit is "0".
(2) Case B; the magnitude relationship is (a), and the replacing bit is "1".
(3) Case C; the magnitude relationship is (b), and the replacing bit is "0".

(4) Case D; the magnitude relationship is (b), and the replacing bit is "1".

(Case A)

The address replacing circuit 13 sets the first transmission address bit string of the layer x and the second transmission address bit string of the layer x to be output to the same value as the input first transmission source address bit string of the layer x (= the second transmission source address bit string of the layer x).

(Case B)

The address replacing circuit 13 sets the first transmission address bit string of the layer x and the second transmission address bit string of the layer x to be output as values obtained by adding "1" to the input first transmission source address bit string of the layer x (= the second transmission source address bit string of the layer x).

(Case C)

The address replacing circuit 13 sets the first transmission address bit string of the layer x to be output as the input first transmission source address bit string of the layer x, and sets the second transmission address bit string of the layer x to be output as the input second transmission source address bit string of the layer x.

(Case D)

The address replacing circuit 13 sets the first transmission address bit string of the layer x to be output as the input second transmission source address bit string of the layer x, and sets the second transmission address bit string of the layer x to be output as the input first transmission source address bit string of the layer x.

Here, the processing by the address replacing circuit 13 will be supplemented with reference to FIG. 4. In FIG. 4, the first address on the horizontal axis corresponds to the address defined by the first transmission source address bit string of the layer x, and the second address on the vertical axis corresponds to the address defined by the second transmission source address bit string of the layer x.

When the input replacing bit is "1", the address replacing circuit 13 basically replaces the first address and the second address. This replacement corresponds to the signal point arrangement indicated by the reference numeral 401 in FIG. 4 being moved to symmetrical positions on the opposite side (close to the vertical axis) with the straight line L as a boundary.

For example, in a case where the signal point arrangement is expressed as "0000011100000001" corresponding to a case where the first address is "7" and the second address is "1", when the input replacing bit is "1", the address replacing circuit 13 replaces both the addresses as illustrated in the case D, and sets the first address to "1" and the second address to "7". In this case, the signal point arrangement is expressed as "0000000100000111" in which the first eight bits and the second eight bits of the original bit string are interchanged.

However, in a case where the signal point arrangement is located exactly on the straight line L, for example, in a case where the signal point arrangement is expressed as "0000001000000010" corresponding to a case where the first address and the second address have even values "2" equal to each other, the original signal point arrangement can be obtained in the end even if the address replacing circuit 13 performs the replacement as described above. Accordingly, in this case, the address replacing circuit 13 sets odd-numbered addresses obtained by adding "1" to the first address (= the second address) as a new first address (that is, the first transmission address bit string) and a new second address (that is, the second transmission address bit string) as illustrated in the above-described case B. In this case, the address replacing circuit 13 obtains the signal point arrangement expressed as "0000001100000011" in which the first address is "3" and the second address is "3" as the new signal point arrangement.

On the other hand, when the replacing bit is "0", the address replacing circuit 13 does not replace the first address and the second address as described in the above Cases A and C. Thus, the probabilistic shaping encoding circuit 1 can uniformly and efficiently express the 4096 signal point arrangements indicated by reference numeral 401 in FIG. 4.

Note that, in the above description, an example has been described in which the distribution circuit 12 performs conversion in such a manner that the magnitude relationship between the value indicated by the first transmission source address bit string of the layer x and the value indicated by the second transmission source address bit string of the layer x is one of (a) a case where the values are even values equal to each other, or (b) a case where the values are different from each other, and the value indicated by the first transmission source address bit string of the layer x is larger than the value indicated by the second transmission source address bit string of the layer x. However, this is an example, and the example of conversion is not limited to the above example. For example, the distribution circuit 12 may perform conversion in such a manner that the above magnitude relationship is one of (c) a case where the values are odd values equal to each other or (d) a case where the values are different from each other, and the value indicated by the first transmission source address bit string of the layer x is smaller than the value indicated by the second transmission source address bit string of the layer x. Further, in the case of (c), if the replacing bit is "1", the address replacing circuit 13 may add "1" to the above two values to make them even.

<First LUT 14 of layer x>

The first LUT 14 of the layer x receives the first transmission bit string of the layer x as an input, and outputs the first transmission shaping bit string of the layer x to the outside (not illustrated). Specifically, the first LUT 14 of the layer x converts the input first transmission bit string of the layer x into the first transmission shaping bit string of the layer x by referring to the table, and outputs the first transmission shaping bit string.

Here, the first transmission bit string of the layer x to be an input includes two bit strings, that is, the first transmission address bit string (the number of bits: A at the maximum) of the layer x output from the address replacing circuit 13 and the first transmission information bit string of the layer x from the outside (not illustrated).

Note that, in a case where the layer x is the lowest layer, the first transmission shaping bit string of the layer x to be an output corresponds to the signal point information indicating the signal point arrangement of the signal space managed by the first LUT 14 of the layer x on a one-to-one basis. Further, in a case where the layer x is an intermediate layer from immediately below the uppermost layer to immediately above the lowermost layer, the first transmission shaping bit string of the layer x corresponds to the designation information designating the combination of the signal point groups in the signal space managed by the first LUT 11 in the layer (layer) immediately below the layer x on a one-to-one basis.

<Second LUT 15 of layer x>

The second LUT 15 of the layer x receives the second transmission bit string of the layer x as an input, and outputs the second transmission shaping bit string of the layer x to the outside (not illustrated). Specifically, the second LUT 15 of the layer x converts the input second transmission bit string of the layer x into the second transmission shaping bit string of the layer x by referring to the table, and outputs the second transmission shaping bit string.

Here, the second transmission bit string of the layer x to be an input includes two bit strings, that is, the second transmission address bit string (the number of bits: A at the maximum) of the layer x output from the address replacing circuit 13 and the second transmission information bit string of the layer x from the outside (not illustrated).

Note that, in a case where the layer x is the lowest layer, the second transmission shaping bit string of the layer x to be an output corresponds to the signal point information indicating the signal point arrangement of the signal space managed by the second LUT 15 of the layer x on a one-to-one basis. Further, when the layer x is the intermediate layer, the second transmission shaping bit string of the layer x corresponds to the designation information designating the combination of the signal point groups in the signal space managed by the second LUT 15 in the layer (layer) immediately below the layer x on a one-to-one basis.

Note that, in the above description, an example has been described in which the first transmission information bit string of the layer x + 1 is input to the first LUT 11 of the layer x + 1, the first transmission information bit string of the layer x is input to the first LUT 14 of the layer x, and the second transmission information bit string of the layer x is input to the second LUT 15 of the layer x. However, the number of bits of each transmission information bit string input to each LUT may be 0. In this case, the probabilistic shaping encoding circuit 1 can further suppress performance deterioration.

In particular, in a circuit including an LUT group having a hierarchical configuration such as the probabilistic shaping encoding circuit 1, the number of bits of a transmission information bit string input from the outside for each LUT may affect the performance. This is because the transmission information bit string input from the outside has a random value. In this regard, the probabilistic shaping encoding circuit 1 does not handle bit strings having random values in the LUT by setting the number of bits of the transmission information bit string input to any LUT among the LUTs to 0. Further, in this case, the LUT only needs to generate the transmission shaping bit string from the transmission address bit string to be an input from the upper layer, but the value of the transmission address bit string to be an input from the upper layer is not random and can be set in advance. Therefore, the probabilistic shaping encoding circuit 1 can further suppress performance deterioration.

Further, in particular, in the probabilistic shaping encoding circuit 1, the number of bits of an input bit string may be smaller than the number of bits of an output bit string, but in this case, the number of bits of the input transmission information bit string to be input may be set to 0 in order from the LUT located in the lower layer. For example, when the layer x is the lowest layer, the number of bits of at least one of the first transmission information bit string of the layer x input to the first LUT 14 of the layer x or the second transmission information bit string of the layer x input to the second LUT 15 of the layer x may be set to 0. Thus, the probabilistic shaping encoding circuit 1 can further suppress performance deterioration.

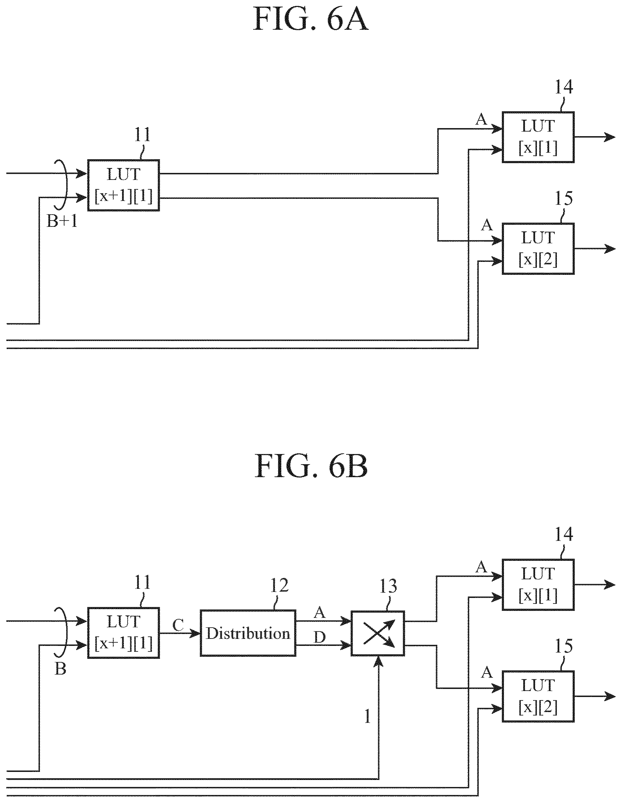

Next, an effect of the probabilistic shaping encoding circuit 1 according to the first embodiment will be described with reference to FIG. 6.

FIG. 6A illustrates a configuration example (hereinafter, also referred to as "conventional example") of a conventional probabilistic shaping encoding circuit, and FIG. 6B illustrates a configuration example (hereinafter, also referred to as "present configuration example") of the probabilistic shaping encoding circuit 1 according to the first embodiment. The conventional example and the present configuration example differ only in whether or not the distribution circuit 12 and the address replacing circuit 13 are provided.

In FIGS. 6A and 6B, the number of bits of a bit string input to and output from each component is indicated by A to D (all non-negative integers). For example, in the conventional example illustrated in FIG. 6A, the number of bits of the bit string input to the m-th LUT 11 of the layer x + 1 is B + 1, and the numbers of bits of the bit string input to the (2m-1)-th LUT 14 of the layer x and the bit string input to the 2m-th LUT 15 of the layer x are A.

Further, in the present configuration example illustrated in FIG. 6B, the number of bits of the m-th transmission bit string of the layer x + 1 input to the m-th LUT 11 of the layer x + 1 is B, the number of bits of the m-th transmission shaping bit string of the layer x + 1 input to the m-th distribution circuit 12 of the layer x is C, the number of bits of the (2m-1)-th transmission source address bit string of the layer x input to the m-th address replacing circuit 13 of the layer x is A, the number of bits of the 2m-th transmission source address bit string of the layer x is D, and the number of bits of the m-th transmission address replacing bit of the layer x is 1.

Further, in the present configuration example illustrated in FIG. 6B, the number of bits of the (2m-1)-th transmission address bit string of the layer x input to the (2m-1)-th LUT 14 of the layer x and the 2m-th transmission address bit string of the layer x input to the 2m-th LUT 15 of the layer x is A at the maximum (equal to or less than A).

Here, for example, assuming that A is eight bits, B is 10 bits, C is 12 bits, and D is six bits, in the conventional example illustrated in FIG. 6A, the number of bits of the input/output bit string with respect to the first LUT 11 of the layer x + 1 is 11 bits (= B + 1) for input and 16 bits (= A × 2) for output. Note that "+1" of the number of bits on the input side is obtained by regarding one bit of the replacing bits input to the address replacing circuit 13 as an input to the first LUT 11 of the layer x + 1 in the present configuration example illustrated in FIG. 6B. At this time, the scale of the first LUT 11 of the layer x + 1 in the conventional example is $2A \times 2^{B+1} = 16 \times 2^{11} = 32768$.

On the other hand, in the present configuration example illustrated in FIG. 6B, the number of bits of the input/output bit string with respect to the first LUT 11 of the layer x + 1 is 10 bits (= B) for input and 12 bits (= C) for output. At this time, the scale of the first LUT 11 of the layer x + 1 in the present configuration example is $C \times 2^B = 12 \times 2^{10} = 12228$.

Therefore, in the present configuration example, the scale of the first LUT 11 of the layer x + 1 can be reduced by 60% or more as compared with the conventional example. Further, in general, the sizes of the distribution circuit 12 and the address replacing circuit 13 are sufficiently small for an LUT of this size (for example, an LUT of 10 kilobit order) and are negligible.

In the conventional example, it is necessary to increase the number of input/output bits with respect to each LUT (for example, the first LUT 11 of the layer x + 1) in order to suppress the performance deterioration, but if the number of input/output bits is increased, the circuit scale increases. On the other hand, in the present configuration example, the distribution circuit 12 and the address replacing circuit 13 are provided at the subsequent stage of the first LUT 11 of the layer x + 1, and the above-described processing is performed by these circuits, so that it is possible to reduce the circuit scale while suppressing the performance deterioration as compared with the conventional example. In particular, in the present configuration example, the effect becomes remarkable by setting the relationship of the numbers of bits of the input/output bit string with respect to each component to C > B, A ≥ D, and A + D ≥ B.

Note that, in the present configuration example, even if the address replacing circuit 13 is omitted, a certain effect can be obtained. For example, when the address replacing circuit 13 is omitted in the present configuration example, the first transmission source address bit string of the layer x output from the distribution circuit 12 is directly input to the first LUT 14 of the layer x, and the second transmission source address bit string of the layer x output from the distribution circuit 12 is directly input to the second LUT 15 of the layer x.

Further, in this case, the first LUT 14 of the layer x generates the first transmission shaping bit string of the layer x from the first transmission source address bit string of the layer x output from the distribution circuit 12 and the first transmission information bit string of the layer x from the outside (not illustrated). Furthermore, the second LUT 15 of the layer x generates the second transmission shaping bit string of the layer x from the second transmission source address bit string of the layer x output from the distribution circuit 12 and the second transmission information bit string of the layer x from the outside (not illustrated).

Further, in this case, for example, one bit of the replacing bit input to the address replacing circuit 13 is input to the first LUT 11 of the layer x + 1. In this case, the scale of the first LUT 11 of the layer x + 1 is C × $2^{B+1}$ = 12 × $2^{11}$ = 24576. Therefore, in the present configuration example, even if the address replacing circuit 13 is omitted, the scale of the first LUT 11 of the layer x + 1 can be reduced by 25% as compared with the conventional example.

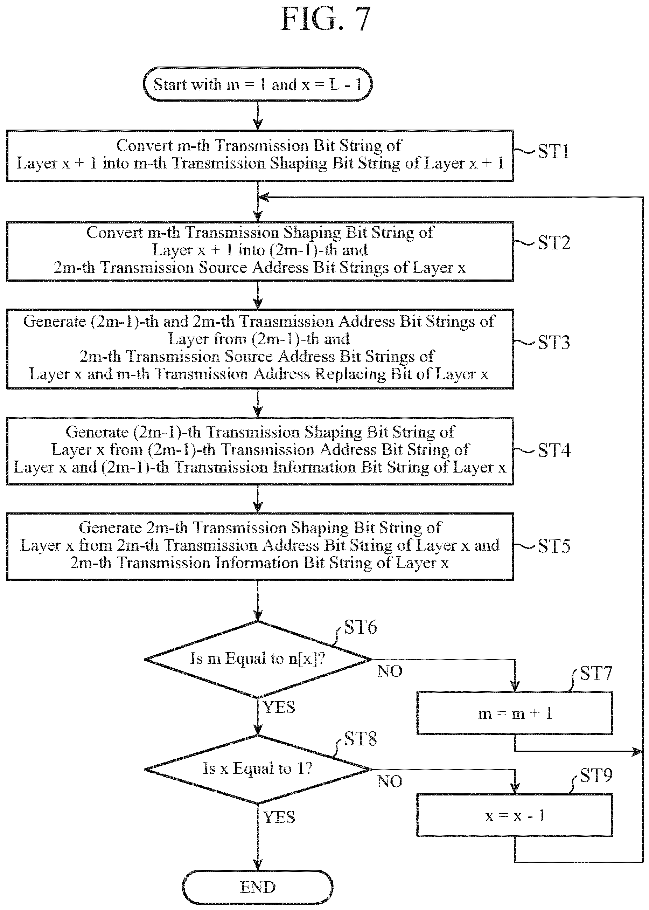

Next, an operation example of the probabilistic shaping encoding circuit 1 according to the first embodiment will be described with reference to FIG. 7. This flowchart starts with m = 1 and x = L-1. Here, L is the number of layers of the LUT group hierarchized in a tree shape.

First, the m-th LUT 11 of the layer x + 1 converts the m-th transmission bit string of the layer x + 1 into the m-th transmission shaping bit string of the layer x + 1 by referring to the table (step ST1).

Next, the m-th distribution circuit 12 of the layer x converts the m-th transmission shaping bit string of the layer x + 1 into the (2m-1)-th transmission source address bit string of the layer x and the 2m-th transmission source address bit string of the layer x (step ST2).

Next, the m-th address replacing circuit 13 of the layer x generates the (2m-1)-th transmission address bit string of the layer x and the 2m-th transmission address bit string of the layer x from the (2m-1)-th transmission source address bit string of the layer x and the 2m-th transmission source address bit string of the layer x, and the m-th transmission address replacing bit of the layer x (step ST3).

Next, the (2m-1)-th LUT 14 of the layer x generates a (2m-1)-th transmission shaping bit string of the layer x from the (2m-1)-th transmission address bit string of the layer x and the (2m-1)-th transmission information bit string of the layer x (step ST4).

Next, the 2m-th LUT 15 of the layer x generates a 2m-th transmission shaping bit string of the layer x from the 2m-th transmission address bit string of the layer x and the 2m-th transmission information bit string of the layer x (step ST5).

Next, the probabilistic shaping encoding circuit 1 determines whether or not m is equal to n[x] (step ST6). Here, n[x] is a natural number indicating how many units are present in one layer when the distribution circuit 12, the address replacing circuit 13, the LUT 14, and the LUT 15 are regarded as one unit.

As a result, when it is determined that m is not equal to n[x] (step ST6; NO), m is counted up by one (step ST7), and the processing returns to step ST2. On the other hand, when it is determined that m is equal to n[x] (step ST6; YES), the processing proceeds to step ST8, and the probabilistic shaping encoding circuit 1 determines whether or not x is equal to 1 (step ST8).

As a result, when it is determined that x is not equal to 1 (step ST8; NO), x is counted down by one (step ST9), and the processing returns to step ST2. On the other hand, when it is determined that x is equal to 1 (step ST8; YES), the processing ends.

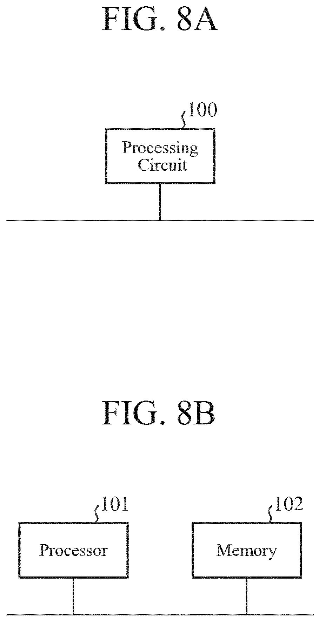

FIG. 8A is a block diagram illustrating hardware components that implement the functions of the information processing device 1. FIG. 8B is a block diagram illustrating a hardware configuration that executes software that implements the functions of the probabilistic shaping encoding circuit 1.

In a case where the processing circuit is a processing circuit 100 of dedicated hardware illustrated in FIG. 8A, the processing circuit 100 corresponds to, for example, a single circuit, a composite circuit, a programmed processor, a parallel programmed processor, an application specific integrated circuit (ASIC), a field-programmable gate array (FPGA), or a combination thereof. The functions of the LUT in the probabilistic shaping encoding circuit 1 may be implemented by separate processing circuits, or these functions may be collectively implemented by one processing circuit.

In a case where the processing circuit is a processor 101 illustrated in FIG. 8B, the functions of the LUT included in the probabilistic shaping encoding circuit 1 are implemented by software, firmware, or a combination of software and firmware. Note that the software or firmware is described as a program and stored in the memory 102. The processor 101 implements the functions of the LUT in the probabilistic shaping encoding circuit 1 by reading and executing programs stored in the memory 102. For example, the information processing device 1 includes the memory 102 for storing a program that, when executed by the processor 101, results in execution of the processing of steps ST1 to ST9 illustrated in FIG. 7.

These programs cause a computer to execute a procedure or a method of the LUT in the probabilistic shaping encoding circuit 1. The memory 102 may be a computer-readable storage medium storing a program for causing a computer to function as the LUT in the probabilistic shaping encoding circuit 1.

The memory 102 corresponds to a nonvolatile or volatile semiconductor memory such as a random access memory (RAM), a read only memory (ROM), a flash memory, an erasable programmable read only memory (EPROM), or an electrically-EPROM (EEPROM), a magnetic disk, a flexible disk, an optical disk, a compact disk, a mini disk, or a DVD.

<Probabilistic shaping decoding circuit 5>

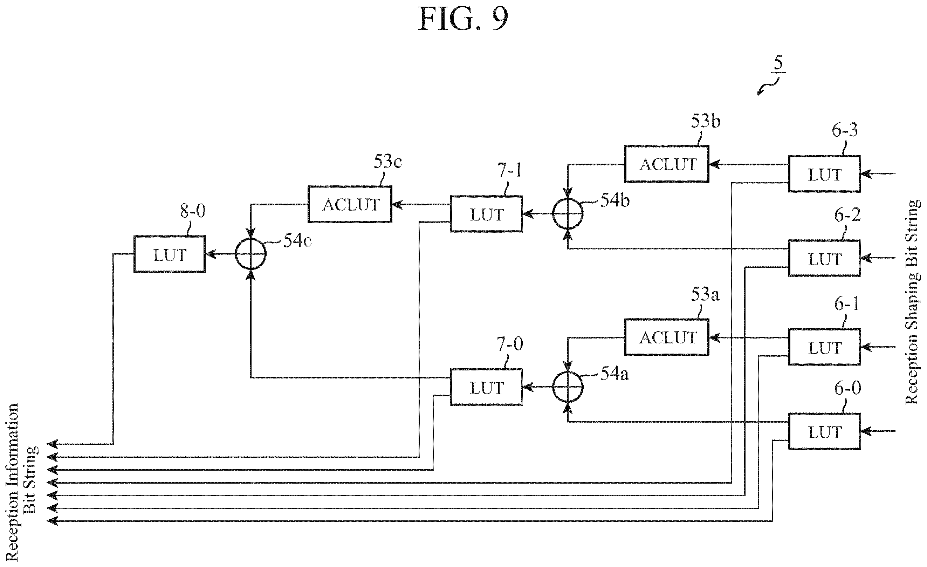

Next, the probabilistic shaping decoding circuit 5 according to the first embodiment will be described. FIG. 9 is a block diagram illustrating a configuration of a probabilistic shaping decoding circuit 5 according to a first embodiment. The probabilistic shaping decoding circuit 5 is provided, for example, in an optical reception device, and restores (decodes) the external input information from the signal point information included in a reception signal received from the optical transmission device.

Note that the probabilistic shaping decoding circuit 5 illustrated in FIG. 9 illustrates a configuration in a case where the address replacing circuit 13 is omitted in the probabilistic shaping encoding circuit 1 provided in the optical transmission device on the transmission side. A configuration of the probabilistic shaping decoding circuit 5 in a case where the probabilistic shaping encoding circuit 1 includes the address replacing circuit 13 will be described in a second embodiment.

The probabilistic shaping decoding circuit 5 is configured on the premise of a circuit including a group of lookup tables (LUT) arranged in a hierarchical manner in the above-described conventional circuit, and has a configuration in which an LUT for address conversion and an adder are additionally provided between the LUTs arranged in the hierarchical manner.

For example, as illustrated in FIG. 9, the probabilistic shaping decoding circuit 5 includes an LUT group hierarchized in a tree shape, that is, an LUT 6-0, an LUT 6-1, an LUT 6-2, an LUT 6-3, an LUT 7-0, an LUT 7-1, and an LUT 8-0, and an LUT 53 (53a, 53b, and 53c) and an adder 54 (54a, 54b, and 54c) for address conversion provided between these LUTs. Data associated with an address is registered in each of these LUTs. Note that the LUT 53 for address conversion is also simply referred to as an "address converting LUT 53".

FIG. 9 illustrates a probabilistic shaping decoding circuit 5 having a three-layer tree-like hierarchical LUT. Here, the number of layers of the LUT may be two layers or less or four layers or more as long as the number of layers is the same as the number of layers of the probabilistic shaping encoding circuit 1. The LUT 6-0, the LUT 6-1, the LUT 6-2, and the LUT 6-3 are LUTs of the 0-th layer which is the lowermost layer. The LUT 7-0 and the LUT 7-1 are LUTs of the first layer which is the intermediate layer. The LUT 6-0 and the LUT 6-1 of the layer immediately below are connected to the LUT 7-0 via the address converting LUT 53a and the adder 54a, and the LUT 6-2 and the LUT 6-3 of the layer immediately below are connected to the LUT 7-1 via the address converting LUT 53b and the adder 54b.

The LUT 8-0 is an LUT of the second layer which is the uppermost layer. The LUT 7-0 and the LUT 7-1 of the layer immediately below are connected to the LUT 8-0 via the address converting LUT 53c and the adder 54c.

Each of the LUT 6-0, the LUT 6-1, the LUT 6-2, the LUT 6-3, the LUT 7-0, the LUT 7-1, and the LUT 8-0 manages a signal space. For example, the signal space managed by the LUT 6-0 is a space (S0) of two QAM signals, the signal space managed by the LUT 6-1 is a space (S1) of another two QAM signals, the signal space managed by the LUT 6-2 is a space (S2) of yet another two QAM signals, and the signal space managed by the LUT 6-3 is a space (S3) of yet another two QAM signals. At this time, the signal spaces managed by the LUT 7-0 are the signal spaces S0 and S1 managed by the LUT 6-0 and the LUT 6-1, and the signal spaces managed by the LUT 7-1 are the signal spaces S2 and S3 managed by the LUT 6-2 and the LUT 6-3. The signal spaces managed by the LUT 8-0 are the signal spaces S0, S1, S2, and S3 managed by the LUT 7-0 and the LUT 7-1. The signal point is a point of a complex amplitude value in a constellation diagram.

A reception shaping bit string, which is a bit string corresponding to the signal point information from LUT 4-0, LUT 4-1, LUT 4-2, and LUT 4-3 in the probabilistic shaping encoding circuit 1, is input to LUT 6-0, LUT 6-1, LUT 6-2, and LUT 6-3.

From the reception shaping bit string, the LUT 6-0 and the LUT 6-1 restore a part of the external input information input to the LUT 4-0 and the LUT 4-1 in the probabilistic shaping encoding circuit 1 as a part of the reception information bit string, and restore the designation information from the LUT 3-0 of the layer immediately above the LUT 4-0 and the LUT 4-1 as the first reception address bit string and the second reception address bit string.

The address converting LUT 53a converts the first reception address bit string, which is the designation information output from the LUT 6-1, into a predetermined post-conversion reception address bit string, and outputs the converted bit string to the adder 54a. The post-conversion reception address bit string is information corresponding to an offset value to be added to the second reception address bit string which is the designation information output from the LUT 6-0 in the adder 54a.

The adder 54a adds the post-conversion reception address bit string output from the address converting LUT 53a and the second reception address bit string that is the designation information output from the LUT 6-0, and outputs a first reception shaping bit string that is a bit sequence indicating the addition result to the LUT 7-0 of the first layer that is the intermediate layer.

The LUT 6-2 and the LUT 6-3 restore a part of the external input information input to the LUT 4-2 and the LUT 4-3 in the probabilistic shaping encoding circuit 1 from the reception shaping bit string as a part of the reception information bit string, and restore the designation information from the LUT 3-1 of the layer immediately above the LUT 4-2 and the LUT 4-3 as the first reception address bit string and the second reception address bit string.

The address converting LUT 53b converts the first reception address bit string, which is the designation information output from the LUT 6-3, into a predetermined post-conversion reception address bit string, and outputs the converted bit string to the adder 54b. The post-conversion reception address bit string is information corresponding to an offset value to be added to the second reception address bit string which is the designation information output from the LUT 6-2 in the adder 54b.

The adder 54b adds the post-conversion reception address bit string output from the address converting LUT 53b and the second reception address bit string that is the designation information output from the LUT 6-2, and outputs a first reception shaping bit string that is a bit sequence indicating the addition result to the LUT 7-1 of the first layer that is the intermediate layer.

The LUT 7-0 of the first layer, which is the intermediate layer, restores a part of the external input information input to the LUT 3-0 in the probabilistic shaping encoding circuit 1 from the first reception shaping bit string input from the adder 54a of the layer immediately below as a part of the reception information bit string, and restores the designation information from the LUT 2-0 of the layer immediately above the LUT 3-0 as the second reception address bit string.

The LUT 7-1 of the first layer, which is the intermediate layer, restores a part of the external input information input to the LUT 3-1 in the probabilistic shaping encoding circuit 1 as a part of the reception information bit string from the first reception shaping bit string input from the adder 54b of the layer immediately below, and restores the designation information from the LUT 2-0 of the layer immediately above the LUT 3-1 as the first reception address bit string.

The address converting LUT 53c converts the first reception address bit string, which is the designation information output from the LUT 7-1, into a predetermined post-conversion reception address bit string, and outputs the converted bit string to the adder 54c. The post-conversion reception address bit string is information corresponding to an offset value to be added to the second reception address bit string which is the designation information output from the LUT 7-0 in the adder 54c.

The adder 54c adds the post-conversion reception address bit string output from the address converting LUT 53c and the second reception address bit string that is the designation information output from the LUT 7-0, and outputs a first reception shaping bit string that is a bit sequence indicating the addition result to the LUT 8-0 of the second layer that is the uppermost layer.

The LUT 8-0 of the second layer, which is the uppermost layer, restores a part of the external input information input to the LUT 2-0 of the second layer in the probabilistic shaping encoding circuit 1 as a part of the reception information bit string from the first reception shaping bit string input from the adder 54c of the immediately lower layer, and outputs all the restored reception information bit strings to the outside.

As described above, the processing in the probabilistic shaping decoding circuit 5 is processing in which the input and the output are switched with respect to the processing in the probabilistic shaping encoding circuit 1.

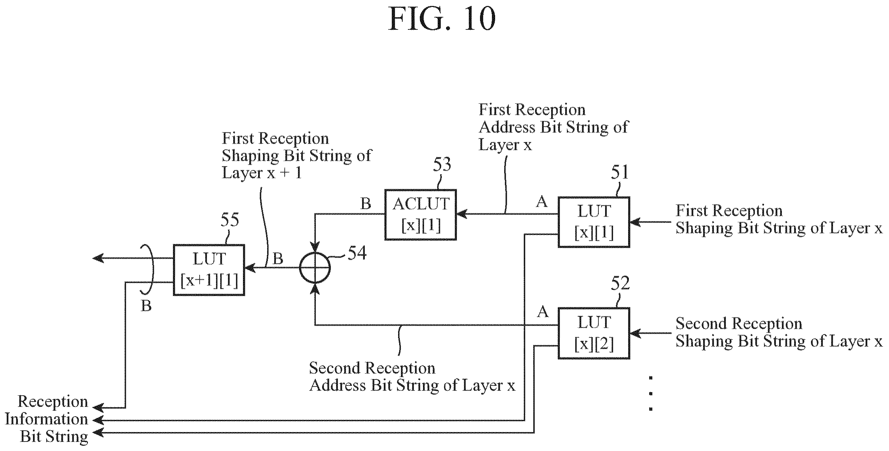

FIG. 10 is a diagram extracting and illustrating a circuit configuration between a (x + 1)-th layer and an x-th layer immediately below the (x + 1)-th layer as a representative example in the probabilistic shaping decoding circuit 5 illustrated in FIG. 9. Note that, in the following description, for convenience of description, the (x + 1)-th layer is denoted as a "layer x + 1", and the x-th layer is denoted as a "layer x". Further, in FIG. 10, the LUTs illustrated in FIG. 9 are generalized in a form independent of the layer, and the LUTs are denoted by reference numerals 51, 52, 53, and 55.

Further, in FIG. 10, the first LUT 51 of the layer x is denoted as LUT [x][1], the second LUT 52 of the layer x is denoted as LUT [x][2], the first address converting LUT 53 of the layer x is denoted as ACLUT [x][1], and the first LUT 55 of the layer x + 1 is denoted as LUT [x + 1][1]. Further, in FIG. 10, the number of bits of the input/output bit string in each of the first LUT 51 of the layer x, the second LUT 52 of the layer x, the first address converting LUT 53 of the layer x, the first adder 54 of the layer x, and the first LUT 55 of the layer x + 1 is denoted by signs A and B (both are non-negative integers). At this time, a relationship of $2A > B \geq A$ is established between the numbers of bits.

<First LUT 51 of layer x>

The first LUT 51 of the layer x receives the first reception shaping bit string of the layer x from the outside (not illustrated) as an input and outputs a first reception bit string of the layer x. Specifically, the first LUT 51 of the layer x converts the input first reception shaping bit string of the layer x into the first reception bit string of the layer x by referring to the table, and outputs the first reception bit string.

Here, the first reception bit string of the layer x to be an output includes a first reception address bit string (bit number: A) of the layer x to be an input to the address converting LUT 53 to be described later and a first reception information bit string of the layer x to the outside (not illustrated). That is, the first LUT 51 of the layer x restores the first reception address bit string of the layer x and the first reception information bit string of the layer x from the first reception shaping bit string of the layer x.

<Second LUT 52 of layer x>

The second LUT 52 of the layer x receives the second reception shaping bit string of the layer x from the outside (not illustrated) as an input and outputs a second reception bit string of the layer x. Specifically, the second LUT 52 of the layer x converts the input second reception shaping bit string of the layer x into the second reception bit string of the layer x by referring to the table, and outputs the second reception shaping bit string.

Here, the second reception bit string of the layer x to be an output includes a second reception address bit string (bit number: A) of the layer x to be an input to the adder 54 to be described later and a second reception information bit string of the layer x to the outside (not illustrated). That is, the second LUT 52 of the layer x restores the second reception address bit string of the layer x and the second reception information bit string of the layer x from the second reception shaping bit string of the layer x.

<First address converting LUT 53 of layer x>

The first address converting LUT 53 of the layer x receives the first reception address bit string (bit number: A) of the layer x output from the first LUT 51 of the layer x as an input, and outputs a first post-conversion reception address bit string (bit number: B) of the layer x to be an input to the adder 54 to be described later.

Specifically, the first address converting LUT 53 of the layer x converts the input first reception address bit string of the layer x into the first post-conversion reception address bit string of the layer x by referring to the table, and outputs the first post-conversion reception address bit string.

Note that the value indicated by the first post-conversion reception address bit string of the layer x to be an output corresponds to an offset value determined on the basis of the first reception address bit string of the layer x to be an input. The first post-conversion reception address bit string of the layer x is added to the second reception address bit string of the layer x output from the second LUT 52 of the layer x in the first adder 54 of the layer x described later.

<First adder 54 of layer x>

The first adder 54 of the layer x adds the first post-conversion reception address bit string (the number of bits: B) of the layer x output from the first address converting LUT 53 of the layer x and the second reception address bit string (the number of bits: A) of the layer x output from the second LUT 52 of the layer x, and outputs a result of the addition to the first LUT 55 of the layer x + 1 described later as a first reception shaping bit string (the number of bits: B) of the layer x + 1.

Here, an example of processing by the address converting LUT 53 and the adder 54 will be described with reference to FIG. 4 described above. For example, a case where 4096 (B = 12 bits) signal point arrangements indicated by reference numeral 401 in FIG. 4 are used in the probabilistic shaping encoding circuit 1 will be considered. Further, it is assumed that A = 8 bits.

At this time, each signal point arrangement is expressed by a combination of the first address (Address1) and the second address (Address2), and each signal point arrangement is expressed as, for example, an address Addr after addition processing by the adder 54 as expressed by the following Formula (1).

$$Addr = A\_offset[Address1] + Address2 \quad (1)$$

Here, A_offset[Address1] is an offset value determined according to the first address, and is an offset value set in the address converting LUT 53. For example, A_offset[Address1] is set in such a manner that A_offset[0] = 0 when the first address is 0, A_offset[1] = 256 when the first address is 1, A_offset[2] = 512 when the first address is 2, and A_offset[255] = x (where x ≤ 4095) when the first address is 255.

For example, when the number of bits of each of the first address and the second address is eight bits, and the first address is "1" and the second address is "1", the signal point arrangement expressed by the combination of the first address and the second address is "0000000100000001". This bit string can be expressed by a result obtained by adding an offset value "100000000" (= 256) to "00000001" which is the second address.

Further, when the number of bits of each of the first address and the second address is eight bits, and the first address is "2" and the second address is "1", the signal point arrangement expressed by the combination of the first address and the second address is "0000001000000001". This bit string can be expressed by a result obtained by adding an offset value "1000000000" (= 512) to "00000001" which is the second address.

Thus, the address converting LUT 53 and the adder 54 can accurately restore the transmission shaping bit string distributed to the two bit strings using the offset value as the reception shaping bit string in the distribution circuit 12 of the probabilistic shaping encoding circuit 1. Thus, the address converting LUT 53 and the adder 54 can use the address space by the combination of the first address and the second address without waste.

Further, at this time, since the 4096 signal point arrangements indicated by reference numeral 401 are defined by B (= 12) bits, both the post-conversion reception address bit string (that is, A_offset[Address1]) output from the address converting LUT 53 and the reception shaping bit string (that is, Addr represented by Formula (1)) after addition processing by the adder 54 do not exceed B bits.

<First LUT 55 of layer x + 1>

The first LUT 55 of the layer x + 1 receives the first reception shaping bit string (the number of bits: B) of the layer x + 1 output from the first adder 54 of the layer x as an input, and outputs the first reception bit string (the number of bits: B) of the layer x + 1 to the outside (not illustrated).

Specifically, the first LUT 55 of the layer x + 1 converts the input first reception shaping bit string of the layer x + 1 into the first reception bit string of the layer x + 1 by referring to the table, and outputs the first reception bit string.

Here, the first reception bit string of the layer x + 1 to be an output includes, for example, a first reception address bit string of the layer x + 1 to the outside (not illustrated) and a first reception information bit string of the layer x + 1 to the outside (not illustrated). That is, the first LUT 55 of the layer x + 1 restores the first reception address bit string of the layer x + 1 and the first reception information bit string of the layer x + 1 from the first reception shaping bit string of the layer x + 1. Here, when the layer x + 1 is the uppermost layer, the first reception address bit string of the layer x + 1 is 0.

Note that, in the above description, an example has been described in which each of the first LUT 51 of the layer x, the second LUT 52 of the layer x, and the first LUT 55 of the layer x + 1 restores the reception information bit string. However, each of these LUTs does not necessarily need to restore the reception information bit string. For example, when the number of bits of each transmission information bit string input to one or more of the first LUT 11 of the layer x + 1, the first LUT 14 of the layer x, and the second LUT 15 of the layer x is 0 in the probabilistic shaping encoding circuit 1 on the transmission side, the number of bits of the reception information bit string restored by the one or more LUTs corresponding to the LUT in which the number of bits of the transmission information bit string is 0 among the first LUT 51 of the layer x, the second LUT 52 of the layer x, and the first LUT 55 of the layer x + 1 may be 0 also in the probabilistic shaping decoding circuit 5 on the reception side. In this case, the probabilistic shaping decoding circuit 5 can accurately restore the reception information bit string.

Further, for example, in the probabilistic shaping encoding circuit 1 on the transmission side, when the layer x is the lowest layer, and the number of bits of at least one of the first transmission information bit string of the layer x input to the first LUT 14 of the layer x or the second transmission information bit string of the layer x input to the second LUT 15 of the layer x is 0, the number of bits of each reception information bit string restored by at least one LUT corresponding to the LUT in which the number of bits of the transmission information bit string is 0 among the first LUT 51 of the layer x and the second LUT 52 of the layer x may be 0 also in the probabilistic shaping decoding circuit 5 on the reception side. In this case, the probabilistic shaping decoding circuit 5 can accurately restore the reception information bit string.

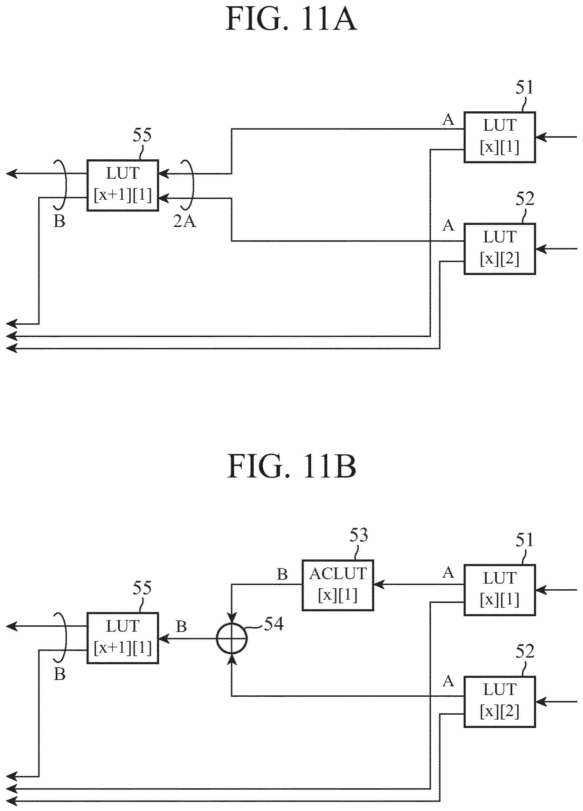

Next, effects of the probabilistic shaping decoding circuit 5 according to the first embodiment will be described with reference to FIG. 11.

FIG. 11A illustrates a configuration example (hereinafter, also referred to as "conventional example") of a conventional probabilistic shaping decoding circuit, and FIG. 11B illustrates a configuration example (hereinafter, also referred to as "present configuration example") of the probabilistic shaping decoding circuit 5 according to the first embodiment. The conventional example and the present configuration example differ only in whether or not the address converting LUT 53 and the adder 54 are provided.

In FIGS. 11A and 11B, the number of bits of a bit string input to and output from each component is indicated by A and B. Here, for example, assuming that A is six bits and B is 10 bits, in the conventional example illustrated in FIG. 11A, the number of bits of the input/output bit string with respect to the first LUT 55 of the layer x + 1 is 12 bits (= A × 2) for input and 10 bits (= B) for output. At this time, the scale of the first LUT 55 of the layer x + 1 in the conventional example is B × $2^{2A}$ = 10 × $2^{12}$ = 40960.

On the other hand, in the present configuration example illustrated in FIG. 11B, the number of bits of the input/output bit string with respect to the first LUT 55 of the layer x + 1 is 10 bits (= B) for input and 10 bits (= B) for output. At this time, the scale of the first LUT 55 of the layer x + 1 in the present configuration example is B × $2^B$ = 10 × $2^{10}$ = 10240.

Further, in the present configuration example illustrated in FIG. 11B, the number of bits of the input/output bit string with respect to the first address converting LUT 53 of the layer x is six bits (= A) for input and 10 bits (= B) for output. At this time, the scale of the first address converting LUT 53 of the layer x in the present configuration example is B × $2^A$ = 10 × $2^6$ = 640.

Therefore, in the present configuration example illustrated in FIG. 11B, the scale of the first LUT 55 of the layer x + 1 and the scale of the first address converting LUT 53 of the layer x are summed to be 10880 (= 10240 + 640).

Therefore, in the present configuration example, the scale of the LUT can be reduced to about 1/4 of the scale of the conventional example. Further, in general, since the size of the adder 54 is about 10 bits with respect to an LUT of this size (for example, an LUT of 10 kilobit order), the size is sufficiently small and negligible.

In the conventional example, it is necessary to increase the number of input/output bits with respect to each LUT (for example, the first LUT 55 of the layer x + 1) in order to suppress the performance deterioration, but if the number of input/output bits is increased, the circuit scale increases. On the other hand, in the present configuration example, by providing the address converting LUT 53 and the adder 54 in the preceding stage of the first LUT 55 of the layer x + 1, and performing the above-described processing by these circuits, the circuit scale can be reduced while suppressing the performance deterioration as compared with the conventional example. In particular, in the present configuration example, the effect becomes remarkable by setting the relationship of the number of bits of the input/output bit string with respect to each component to $2A > B \geq A$.

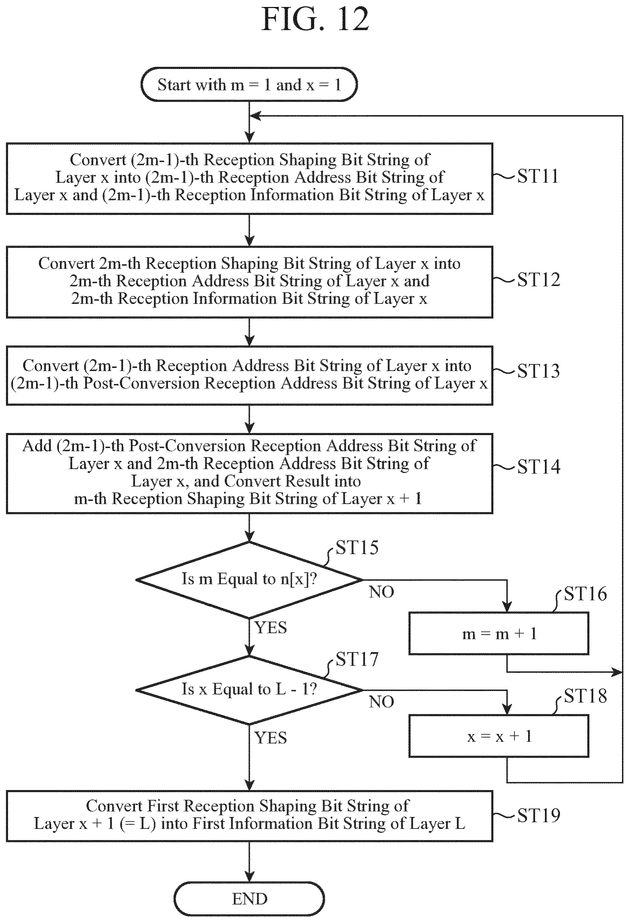

Next, an operation example of the probabilistic shaping decoding circuit 5 according to the first embodiment will be described with reference to FIG. 12. This flowchart starts with m = 1 and x = 1.

First, the m-th LUT 51 of the layer x converts the (2m-1)-th reception shaping bit string of the layer x into a (2m-1)-th reception address bit string of the layer x and a (2m-1)-th reception information bit string of the layer x by referring to the table (step ST11).

Next, the m-th LUT 52 of the layer x converts a 2m-th reception shaping bit string of the layer x into a 2m-th reception address bit string of the layer x and a 2m-th reception information bit string of the layer x by referring to the table (step ST12).

Next, the m-th address converting LUT 53 of the layer x converts the (2m-1)-th reception address bit string of the layer x into a (2m-1)-th post-conversion reception address bit string of the layer x by referring to the table (step ST13).

Next, the m-th adder 54 of the layer x adds the (2m-1)-th post-conversion reception address bit string of the layer x and the 2m-th reception address bit string of the layer x, and converts the result into an m-th reception shaping bit string of the layer x + 1 (step ST14).

Next, the probabilistic shaping decoding circuit 5 determines whether or not m is equal to n[x] (step ST5). Here, n[x] is a natural number indicating how many units are in one layer when the LUT 51, the LUT 52, the address converting LUT 53, and the adder 54 are set as one unit.

As a result, when it is determined that m is not equal to n[x] (step ST15; NO), m is counted up by 1 (step ST16), and the processing returns to step ST11. On the other hand, when it is determined that m is equal to n[x] (step ST15; YES), the processing proceeds to step ST17, and the probabilistic shaping decoding circuit 5 determines whether or not x is equal to L-1 (step ST17). Here, L is the number of layers of the LUT group hierarchized in a tree shape.

As a result, when it is determined that x is not equal to L-1 (step ST17; NO), x is counted up by 1 (step ST18), and the processing returns to step ST11. On the other hand, when it is determined that x is equal to L-1 (step ST17; YES), the processing proceeds to step ST19.

In step ST19, the first LUT 55 of the layer x + 1 (= L) converts the first reception shaping bit string of the layer x + 1 into the first reception bit string of the layer x + 1 by referring to the table (step ST19), and ends the processing.

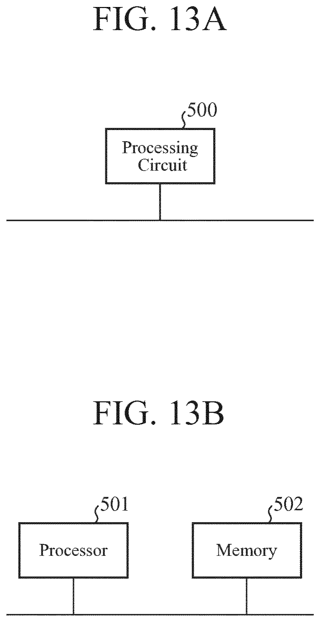

FIG. 13A is a block diagram illustrating hardware components that implement the functions of the probabilistic shaping decoding circuit 5. FIG. 13B is a block diagram illustrating a hardware configuration that executes software that implements the functions of the probabilistic shaping decoding circuit 5.

In a case where the processing circuit is a processing circuit 500 of dedicated hardware illustrated in FIG. 13A, the processing circuit 500 corresponds to, for example, a single circuit, a composite circuit, a programmed processor, a parallel programmed processor, an application specific integrated circuit (ASIC), a field-programmable gate array (FPGA), or a combination thereof. The functions of the LUT in the probabilistic shaping decoding circuit 5 may be implemented by separate processing circuits, or these functions may be collectively implemented by one processing circuit.

In a case where the processing circuit is a processor 501 illustrated in FIG. 13B, the functions of the LUT included in the probabilistic shaping decoding circuit 5 are implemented by software, firmware, or a combination of software and firmware. Note that the software or firmware is described as a program and stored in a memory 502. The processor 501 implements the functions of the LUT in the probabilistic shaping decoding circuit 5 by reading and executing the program stored in the memory 502. For example, the probabilistic shaping decoding circuit 5 includes a memory 202 for storing a program that, when executed by the processor 501, results in execution of the processing of steps ST11 to ST19 illustrated in FIG. 12.

These programs cause a computer to execute the LUT procedure or method in the probabilistic shaping decoding circuit 5. The memory 502 may be a computer-readable storage medium storing a program for causing a computer to function as the LUT in the probabilistic shaping decoding circuit 5.

The memory 502 corresponds to a nonvolatile or volatile semiconductor memory such as a random access memory (RAM), a read only memory (ROM), a flash memory, an erasable programmable read only memory (EPROM), or an electrically-EPROM (EEPROM), a magnetic disk, a flexible disk, an optical disk, a compact disk, a mini disk, or a DVD.

As described above, according to the first embodiment, the probabilistic shaping decoding circuit 5 includes: with x, m, and n[x] being natural numbers (m = 1, 2, ..., n[x]), the (2m-1)-th lookup table 51 of the layer x to restore a (2m-1)-th reception address bit string of the layer x and a (2m-1)-th reception information bit string of the layer x which is a part of an information bit sequence of a communication target from a (2m-1)-th reception shaping bit string of the layer x; the 2m-th lookup table 52 of the layer x to restore a 2m-th reception address bit string of the layer x and a 2m-th reception information bit string of the layer x which is a part of the information bit sequence of the communication target from a 2m-th reception shaping bit string of the layer x; the m-th address conversion lookup table 53 of the layer x to convert the (2m-1)-th reception address bit string of the layer x into a (2m-1)-th post-conversion reception address bit string of the layer x corresponding to an offset value added to the 2m-th reception address bit string of the layer x; the m-th adder 54 of the layer x to add the (2m-1)-th post-conversion reception address bit string of the layer x and the 2m-th reception address bit string of the layer x and output a bit string indicating an addition result as an m-th reception shaping bit string of the layer x + 1; and the m-th lookup table 55 of the layer x + 1 to restore an m-th reception address bit string of the layer x + 1 and an m-th reception information bit string of the layer x which is a part of the information bit sequence of the communication target from the m-th reception shaping bit string of the layer x + 1. Each of the lookup tables is hierarchized in a tree shape, and a reception shaping bit string input to each of the lookup tables corresponds to designation information designating a combination of signal point groups in a signal space managed by each of the lookup tables or signal point information indicating a signal point arrangement of the signal space. Thus, the probabilistic shaping decoding circuit 5 according to the first embodiment can reduce the circuit scale while suppressing the performance deterioration as compared with the conventional circuit.

Further, in the probabilistic shaping decoding circuit 5, A and B are non-negative integers, and when the number of bits of the (2m-1)-th reception address bit string of the layer x that is restored in the (2m-1)-th lookup table 51 of the layer x and input to the m-th address conversion lookup table 53 of the layer x is A, the number of bits of the 2m-th reception address bit string of the layer x that is restored in the 2m-th lookup table 52 of the layer x and input to the m-th adder 54 of the layer x is A, the number of bits of the (2m-1)-th post-conversion reception address bit string of the layer x that is converted in the m-th address conversion lookup table 53 of the layer x and input to the m-th adder 54 of the layer x is B, and the number of bits of the m-th reception shaping bit string of the layer x + 1 output from the m-th adder 54 of the layer x is B, the number of combinations of the (2m-1)-th reception address bit string of the layer x and the 2m-th reception address bit string of the layer x is 2 raised to the power of B, and 2A > B ≥ A. Thus, the probabilistic shaping decoding circuit 5 according to the first embodiment can make the effects of suppressing the performance deterioration and reducing the circuit scale with respect to the conventional circuit remarkable.

Further, in the probabilistic shaping decoding circuit 5, the number of bits of the reception information bit string restored in any lookup table among the lookup tables is 0. Thus, the probabilistic shaping decoding circuit 5 according to the first embodiment can accurately restore the reception information bit string.

Further, in the probabilistic shaping decoding circuit 5, when the layer x is the lowest layer, the number of bits of at least one of the (2m-1)-th reception information bit string of the layer x restored in the (2m-1)-th lookup table 51 of the layer x or the 2m-th reception information bit string of the layer x restored in the 2m-th lookup table 52 of the layer x is 0. Thus, the probabilistic shaping decoding circuit 5 according to the first embodiment can accurately restore the reception information bit string.

Further, in the probabilistic shaping decoding circuit 5, when the layer x + 1 is the highest layer, the number of bits of the m-th reception address bit string of the layer x + 1 restored in the m-th lookup table 55 of the layer x + 1 is 0. Thus, the probabilistic shaping decoding circuit 5 according to the first embodiment can suppress an increase in circuit scale with respect to the conventional circuit.

Further, in the probabilistic shaping decoding circuit 5, when the layer x is the lowest layer, the (2m-1)-th reception shaping bit string of the layer x input to the (2m-1)-th lookup table 51 of the layer x and the 2m-th reception shaping bit string of the layer x input to the 2m-th lookup table 52 of the layer x correspond to signal point information indicating a signal point arrangement of a signal space managed by each of the lookup tables. Thus, the probabilistic shaping decoding circuit 5 according to the first embodiment can restore the reception information bit string from the signal point information indicating the signal point arrangement of the signal space managed by each lookup table of the lowest layer.

Second Embodiment

In the first embodiment, the probabilistic shaping decoding circuit 5 in a case where the address replacing circuit 13 is omitted in the probabilistic shaping encoding circuit 1 on the transmission side has been described. In a second embodiment, a probabilistic shaping decoding circuit 5b in a case where the probabilistic shaping encoding circuit 1 on the transmission side includes the address replacing circuit 13 will be described.

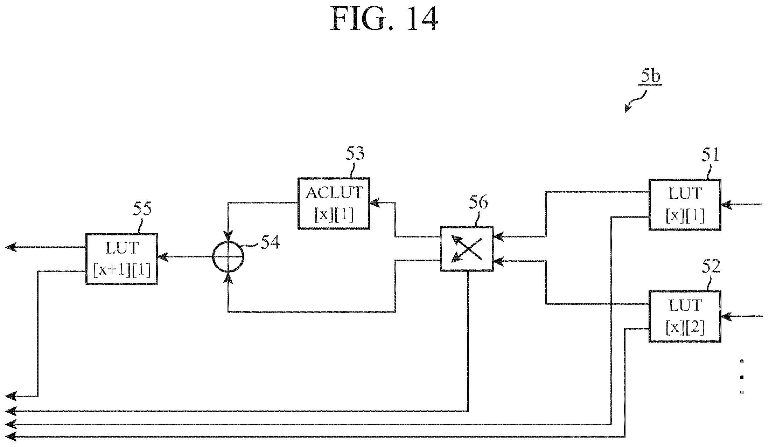

FIG. 14 is a block diagram illustrating a configuration of a probabilistic shaping decoding circuit 5b according to the second embodiment, and is a diagram illustrating an extracted circuit configuration between a (x + 1)-th layer and an x-th layer immediately below the (x + 1)-th layer as a representative example. In the probabilistic shaping decoding circuit 5b according to the second embodiment, a first address replacing circuit 56 of a layer x is added to the probabilistic shaping decoding circuit 5 according to the first embodiment. Since the other configurations of the probabilistic shaping decoding circuit 5b according to the second embodiment are the same as those of the probabilistic shaping decoding circuit 5 according to the first embodiment illustrated in FIG. 1, the same reference numerals are given and the description thereof will be omitted.

<First address replacing circuit 56 of layer x>

As illustrated in FIG. 14, the first address replacing circuit 56 of the layer x is provided between a first LUT 51 of the layer x and a second LUT 52 of the layer x, and a first address converting LUT 53 of the layer x and a first adder 54 of the layer x.

The first address replacing circuit 56 of the layer x receives a first reception address bit string (bit number: A) of the layer x output from the first LUT 51 of the layer x and a second reception address bit string (bit number: A) of the layer x output from the second LUT 52 of the layer x as inputs, and outputs a first reception source address bit string (bit number: A) of the layer x to the first address converting LUT 53 of the layer x, a second reception source address bit string (bit number: D) of the layer x to the first adder 54 of the layer x, and a first reception address replacing bit of the layer x to the outside (not illustrated). Among these, the first reception address replacing bit of the layer x is a part of the reception information bit string output to the outside.

An example of processing of the first address replacing circuit 56 of the layer x will be described. The first address replacing circuit 56 of the layer x basically performs processing opposite to the processing of the address replacing circuit 13 in the probabilistic shaping encoding circuit 1.

For example, the first address replacing circuit 56 of the layer x determines the contents of the processing according to the magnitude relationship between the value indicated by the first reception address bit string of the layer x to be an input and the value indicated by the second reception address bit string of the layer x.

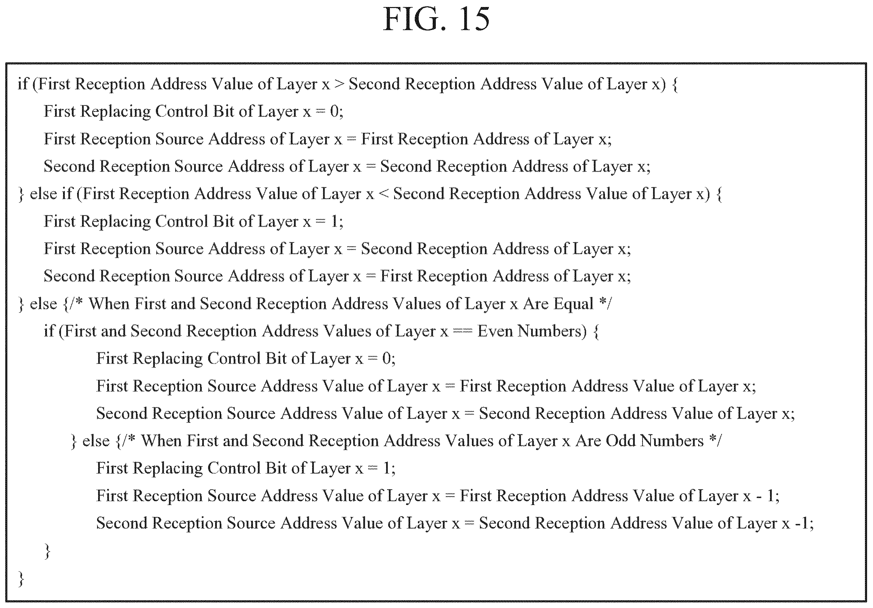

Specifically, the first address replacing circuit 56 of the layer x performs processing according to the following four cases. Note that FIG. 15 illustrates an example of an algorithm describing processing in the following four cases.

 (1) Case A'; a value indicated by the first reception address bit string of the layer x is larger than a value indicated by the second reception address bit string of the layer x.
 (2) Case B'; a value indicated by the first reception address bit string of the layer x is smaller than a value indicated by the second reception address bit string of the layer x.

 (3) Case C'; a value indicated by the first reception address bit string of the layer x and a value indicated by the second reception address bit string of the layer x are equal, and are both even numbers.
 (4) Case D'; a value indicated by the first reception address bit string of the layer x and a value indicated by the second reception address bit string of the layer x are equal, and are both odd numbers.

(Case A')

The first address replacing circuit 56 of the layer x outputs "0" as the first reception address replacing bit of the layer x, outputs the first reception address bit string of the layer x as the first reception source address bit string of the layer x, and outputs the second reception address bit string of the layer x as the second reception source address bit string of the layer x.

(Case B')

The first address replacing circuit 56 of the layer x outputs "1" as the first reception address replacing bit of the layer x, outputs the second reception address bit string of the layer x as the first reception source address bit string of the layer x, and outputs the first reception address bit string of the layer x as the second reception source address bit string of the layer x.

(Case C')

The first address replacing circuit 56 of the layer x outputs "0" as the first reception address replacing bit of the layer x, outputs the first reception address bit string of the layer x as the first reception source address bit string of the layer x, and outputs the second reception address bit string of the layer x as the second reception source address bit string of the layer x.

(Case D')

The first address replacing circuit 56 of the layer x outputs "1" as the first reception address replacing bit of the layer x, outputs a bit string indicating a value obtained by subtracting 1 from a value indicated by the first reception address bit string of the layer x as the first reception source address bit string of the layer x, and outputs a bit string indicating a value obtained by subtracting 1 from a value indicated by the second reception address bit string of the layer x as the second reception source address bit string of the layer x.

Note that the cases A' to D' correspond to cases opposite to the cases A to D in which the first address replacing circuit 13 of the layer x determines the processing content in the probabilistic shaping encoding circuit 1 described above.

Further, in this case, instead of the (2m-1)-th reception address bit string of the layer x, the first address converting LUT 53 of the layer x receives the first reception source address bit string (bit number: A) of the layer x output from the first address replacing circuit 56 of the layer x as an input, and outputs the first post-conversion reception address bit string (bit number: B) of the layer x to be an input to the adder 54 described later.

Specifically, the first address converting LUT 53 of the layer x converts the input first reception source address bit string of the layer x into a first post-conversion reception address bit string of the layer x by referring to the table, and outputs the first post-conversion reception address bit string.

Further, the first adder 54 of the layer x adds the second reception source address bit string (the number of bits: D) of the layer x output from the first address replacing circuit 56 of the layer x and the first post-conversion reception address bit string (the number of bits: B) of the layer x output from the first address converting LUT 53 of the layer x instead of the 2m-th reception address bit string of the layer x, and outputs the addition result to the first LUT 55 of the layer x + 1 as the first reception shaping bit string (the number of bits: B) of the layer x + 1. At this time, the relationship of the number of bits is 2A > B ≥ A and A ≥ D.

As described above, the probabilistic shaping decoding circuit 5b according to the second embodiment basically includes the first address replacing circuit 56 of the layer x configured to perform processing opposite to the processing of the address replacing circuit 13 in the probabilistic shaping encoding circuit 1. Here, in a case where the probabilistic shaping encoding circuit 1 includes the address replacing circuit 13, as described above, for example, the 4096 signal point arrangements indicated by reference numeral 401 in FIG. 4 can be uniformly and efficiently expressed. In this regard, since the probabilistic shaping decoding circuit 5b according to the second embodiment includes the first address replacing circuit 56 of the layer x, it is possible to accurately restore the reception shaping bit string encoded by the probabilistic shaping encoding circuit 1 including the address replacing circuit 13 in addition to the effect of the first embodiment.

Note that, in the above example, an example has been described in which the first address replacing circuit 56 of the layer x performs processing according to the four cases. However, this is an example, and the example of the processing is not limited to the above example. For example, it is sufficient if the first address replacing circuit 56 of the layer x basically performs processing opposite to that of the first address replacing circuit 13 of the layer x in the probabilistic shaping encoding circuit 1, and when the processing content of the first address replacing circuit 13 of the layer x is changed, the processing content may be changed according to the change.

As described above, according to the second embodiment, the probabilistic shaping decoding circuit 5b includes the m-th address replacing circuit 56 of the layer x that restores the (2m-1)-th reception source address bit string of the layer x, the 2m-th reception source address bit string of the layer x, and the m-th reception address replacing bit of the layer x that is a part of the information bit sequence of the communication target from the (2m-1)-th reception address bit string of the layer x restored by the (2m-1)-th lookup table 51 of the layer x and the 2m-th reception address bit string of the layer x restored by the 2m-th lookup table 52 of the layer x.

The m-th address conversion lookup table 53 of the layer x converts, instead of the (2m-1)-th reception address bit string of the layer x, the (2m-1)-th reception source address bit string of the layer x restored by the m-th address replacing circuit 56 of the layer x into the (2m-1)-th post-conversion reception address bit string of the layer x corresponding to the offset value to be added to the 2m-th reception source address bit string of the layer x, and the m-th adder 54 of the layer x adds the 2m-th reception source address bit string of the layer x and the (2m-1)-th post-conversion reception address bit string of the layer x instead of the 2m-th reception address bit string of the layer x, and outputs a bit string indicating the addition result as the m-th reception shaping bit string of the layer x + 1. Thus, in addition to the effects of the first embodiment, the probabilistic shaping decoding circuit 5b according to the second embodiment can accurately restore the reception shaping bit string encoded by the probabilistic shaping encoding circuit 1 including the address replacing circuit 13.

Further, when the value indicated by the (2m-1)-th reception address bit string of the layer x is larger than the value indicated by the 2m-th reception address bit string of the layer x, the m-th address replacing circuit 56 of the layer x sets the m-th reception address replacing bit of the layer x to 0, sets the (2m-1)-th reception address bit string of the layer x to the (2m-1)-th reception source address bit string of the layer x, and sets the 2m-th reception address bit string of the layer x to the 2m-th reception source address bit string of the layer x. Furthermore, when the value indicated by the (2m-1)-th reception address bit string of the layer x is smaller than the value indicated by the 2m-th reception address bit string of the layer x, the m-th reception address replacing bit of the layer x is set to 1, the 2m-th reception address bit string of the layer x is set to the (2m-1)-th reception source address bit string of the layer x, and the (2m-1)-th reception address bit string of the layer x is set to the 2m-th reception source address bit string of the layer x. Further, when the value indicated by the (2m-1)-th reception address bit string of the layer x is equal to the value indicated by the 2m-th reception address bit string of the layer x, and both are even numbers, the m-th reception address replacing bit of the layer x is set to 0, the (2m-1)-th reception address bit string of the layer x is set to the (2m-1)-th reception source address bit string of the layer x, and the 2m-th reception address bit string of the layer x is set to the 2m-th reception source address bit string of the layer x. Furthermore, when the value indicated by the (2m-1)-th reception address bit string of the layer x is equal to the value indicated by the 2m-th reception address bit string of the layer x, and both are odd numbers, the m-th reception address replacing bit of the layer x is set to 1, a bit string indicating a value obtained by subtracting 1 from the value indicated by the (2m-1)-th reception address bit string of the layer x is set to the (2m-1)-th reception source address bit string of the layer x, and a bit string indicating a value obtained by subtracting 1 from the value indicated by the 2m-th reception address bit string of the layer x is set to the 2m-th reception source address bit string of the layer x. Thus, in addition to the effects of the first embodiment, the probabilistic shaping decoding circuit 5b according to the second embodiment can accurately restore the reception shaping bit string encoded by the probabilistic shaping encoding circuit 1 including the address replacing circuit 13.

Note that, in the present disclosure, free combinations of the individual embodiments, modifications of any components of the individual embodiments, or omissions of any components in the individual embodiments are possible.

INDUSTRIAL APPLICABILITY

The present disclosure can reduce a circuit scale while suppressing performance degradation as compared with a conventional circuit, and is suitable for use in a probabilistic shaping decoding circuit and a probabilistic shaping decoding method.

REFERENCE SIGNS LIST

1: probabilistic shaping encoding circuit, 2-0, 3-0, 3-1, 4-0, 4-1, 4-2, 4-3, 6-0, 6-1, 6-2, 6-3, 7-0, 7-1, 8-0, 11, 14, 15, 51, 52, 55: lookup table (LUT), 12, 12a, 12b, 12c: distribution circuit, 13, 13a, 13b, 13c, 56, 56a, 56b, 56c: address replacing circuit, 53, 53a, 53b, 53c: address conversion lookup table (LUT), 54, 54a, 54b, 54c: adder, 100, 500: processing circuit, 101, 501: processor, 102, 502: memory, 401: signal point arrangement, L: straight line

**Claims**

1. A probabilistic shaping decoding circuit, comprising:

   with x, m, and n[x] being natural numbers (m = 1, 2, ..., n[x]),
   a (2m-1)-th lookup table of a layer x to restore a (2m-1)-th reception address bit string of the layer x and a (2m-1)-th reception information bit string of the layer x which is a part of an information bit sequence of a communication target from a (2m-1)-th reception shaping bit string of the layer x;
a 2m-th lookup table of the layer x to restore a 2m-th reception address bit string of the layer x and a 2m-th reception information bit string of the layer x which is a part of the information bit sequence of the communication target from a 2m-th reception shaping bit string of the layer x;
an m-th address conversion lookup table of the layer x to convert the (2m-1)-th reception address bit string of the layer x into a (2m-1)-th post-conversion reception address bit string of the layer x corresponding to an offset value added to the 2m-th reception address bit string of the layer x;
an m-th adder of the layer x to add the (2m-1)-th post-conversion reception address bit string of the layer x and the 2m-th reception address bit string of the layer x and output a bit string indicating an addition result as an m-th reception shaping bit string of a layer x + 1; and
an m-th lookup table of the layer x + 1 to restore an m-th reception address bit string of the layer x + 1 and an m-th reception information bit string of the layer x which is a part of the information bit sequence of the communication target from the m-th reception shaping bit string of the layer x + 1, wherein
each of the lookup tables is hierarchized in a tree shape, and
a reception shaping bit string input to each of the lookup tables corresponds to designation information designating a combination of signal point groups in a signal space managed by each of the lookup tables or signal point information indicating a signal point arrangement of the signal space.

2. The probabilistic shaping decoding circuit according to claim 1, wherein

   A and B are non-negative integers, and
   when a number of bits of the (2m-1)-th reception address bit string of the layer x that is restored in the (2m-1)-th lookup table of the layer x and input to the m-th address conversion lookup table of the layer x is A,
   a number of bits of the 2m-th reception address bit string of the layer x that is restored in the 2m-th lookup table of the layer x and input to the m-th adder of the layer x is A,
   a number of bits of the (2m-1)-th post-conversion reception address bit string of the layer x that is converted in the m-th address conversion lookup table of the layer x and input to the m-th adder of the layer x is B, and
   a number of bits of the m-th reception shaping bit string of the layer x + 1 output from the m-th adder of the layer x is B,
a number of combinations of the (2m-1)-th reception address bit string of the layer x and the 2m-th reception address bit string of the layer x is 2 raised to a power of B, and 2A > B ≥ A.

3. The probabilistic shaping decoding circuit according to claim 1 or 2, wherein a number of bits of the reception information bit string restored in any lookup table among the lookup tables is 0.

4. The probabilistic shaping decoding circuit according to claim 1 or 2, wherein

when the layer x is a lowest layer,
a number of bits of at least one of the (2m-1)-th reception information bit string of the layer x restored in the (2m-1)-th lookup table of the layer x or the 2m-th reception information bit string of the layer x restored in the 2m-th lookup table of the layer x is 0.

5. The probabilistic shaping decoding circuit according to any one of claims 1 to 4, wherein

when the layer x + 1 is a highest layer,
a number of bits of the m-th reception address bit string of the layer x + 1 restored in the m-th lookup table of the layer x + 1 is 0.

6. The probabilistic shaping decoding circuit according to any one of claims 1 to 5, wherein

when the layer x is a lowest layer,
the (2m-1)-th reception shaping bit string of the layer x input to the (2m-1)-th lookup table of the layer x and the 2m-th reception shaping bit string of the layer x input to the 2m-th lookup table of the layer x correspond to signal point information indicating a signal point arrangement of a signal space managed by each of the lookup tables.

7. The probabilistic shaping decoding circuit according to claim 1, further comprising:

an m-th address replacing circuit of the layer x to restore a (2m-1)-th reception source address bit string of the layer x, a 2m-th reception source address bit string of the layer x, and an m-th reception address replacing bit of the layer x which is a part of the information bit sequence of the communication target
from the (2m-1)-th reception address bit string of the layer x restored in the (2m-1)-th lookup table of the layer x and the 2m-th reception address bit string of the layer x restored in the 2m-th lookup table of the layer x, wherein
an m-th address conversion lookup table of a layer x
converts the (2m-1)-th reception source address bit string of the layer x restored in the m-th address replacing circuit of the layer x into a (2m-1)-th post-conversion reception address bit string of the layer x corresponding to an offset value added to the 2m-th reception source address bit string of the layer x instead of the (2m-1)-th reception address bit string of the layer x, and
an m-th adder of the layer x
adds the 2m-th reception source address bit string of the layer x and the (2m-1)-th post-conversion reception address bit string of the layer x instead of the 2m-th reception address bit string of the layer x, and outputs a bit string indicating an addition result as an m-th reception shaping bit string of the layer x + 1.

8. The probabilistic shaping decoding circuit according to claim 7, wherein

the m-th address replacing circuit of the layer x,
when a value indicated by the (2m-1)-th reception address bit string of the layer x is larger than a value indicated by the 2m-th reception address bit string of the layer x,
sets the m-th reception address replacing bit of the layer x to 0,
sets the (2m-1)-th reception address bit string of the layer x to the (2m-1)-th reception source address bit string of the layer x,
sets the 2m-th reception address bit string of the layer x to the 2m-th reception source address bit string of the layer x,
when the value indicated by the (2m-1)-th reception address bit string of the layer x is smaller than the value indicated by the 2m-th reception address bit string of the layer x,
sets the m-th reception address replacing bit of the layer x to 1,
sets the 2m-th reception address bit string of the layer x to the (2m-1)-th reception source address bit string of the layer x,
sets the (2m-1)-th reception address bit string of the layer x to the 2m-th reception source address bit string of the layer x,
when the value indicated by the (2m-1)-th reception address bit string of the layer x and the value indicated by the 2m-th reception address bit string of the layer x are equal to each other and are both even numbers,
sets the m-th reception address replacing bit of the layer x to 0,
sets the (2m-1)-th reception address bit string of the layer x to the (2m-1)-th reception source address bit string of the layer x,
sets the 2m-th reception address bit string of the layer x to the 2m-th reception source address bit string of the layer x, and

when the value indicated by the (2m-1)-th reception address bit string of the layer x and the value indicated by the 2m-th reception address bit string of the layer x are equal to each other and are both odd numbers,

sets the m-th reception address replacing bit of the layer x to 1,

sets a bit string indicating a value obtained by subtracting 1 from the value indicated by the (2m-1)-th reception address bit string of the layer x to the (2m-1)-th reception source address bit string of the layer x, and

sets a bit string indicating a value obtained by subtracting 1 from the value indicated by the 2m-th reception address bit string of the layer x to a 2m-th reception source address bit string of the layer x.

9. A probabilistic shaping decoding method performed by a probabilistic shaping decoding circuit including a plurality of lookup tables hierarchized in a tree shape, the probabilistic shaping decoding method comprising:

with x, m, and n[x] being natural numbers (m = 1, 2, ..., n[x]),

by a (2m-1)-th lookup table of a layer x, restoring a (2m-1)-th reception address bit string of the layer x and a (2m-1)-th reception information bit string of the layer x which is a part of an information bit sequence of a communication target from a (2m-1)-th reception shaping bit string of the layer x;

by a 2m-th lookup table of the layer x, restoring a 2m-th reception address bit string of the layer x and a 2m-th reception information bit string of the layer x which is a part of the information bit sequence of the communication target from a 2m-th reception shaping bit string of the layer x;

by an m-th address conversion lookup table of the layer x, converting the (2m-1)-th reception address bit string of the layer x into a (2m-1)-th post-conversion reception address bit string of the layer x corresponding to an offset value added to the 2m-th reception address bit string of the layer x;

by an m-th adder of the layer x, adding the (2m-1)-th post-conversion reception address bit string of the layer x and the 2m-th reception address bit string of the layer x and outputting a bit string indicating an addition result as an m-th reception shaping bit string of a layer x + 1; and

by an m-th lookup table of the layer x + 1, restoring an m-th reception address bit string of the layer x + 1 and an m-th reception information bit string of the layer x which is a part of the information bit sequence of the communication target from the m-th reception shaping bit string of the layer x + 1, wherein

a reception shaping bit string input to each of the lookup tables corresponds to designation information designating a combination of signal point groups in a signal space managed by each of the lookup tables or signal point information indicating a signal point arrangement of the signal space.

# FIG. 1

EP 4 661 351 A1

# FIG. 2

# FIG. 3A

Effective Bit Width of First Transmission Source Address Bit String > E

(Effective Bit Width of First Transmission Source Address Bit String
> Effective Bit Width of Second Transmission Source Address Bit String)

| Delimiter Signal | First Transmission Source Address Bit String of Layer x | Second Transmission Source Address Bit String of Layer x |
|---|---|---|
| 1 1 | | |

| Delimiter Signal | First Transmission Source Address Bit String of Layer x | Second Transmission Source Address Bit String of Layer x |
|---|---|---|
| 1 0 | | |

# FIG. 3B

Effective Bit Width of First Transmission Source Address Bit String ≤ E

| Delimiter Signal | First Transmission Source Address Bit String of Layer x | Second Transmission Source Address Bit String of Layer x |
|---|---|---|
| 0 | | |

EP 4 661 351 A1

# FIG. 4

# FIG. 5

```
if (First Transmission Source Address Value of Layer x ≠ Second Transmission Source Address Value of Layer x) {
    if (First Replacing Control Bit of Layer x  == 0) {
        First Transmission Address Value of Layer x = First Transmission Source Address Value of Layer x;
        Second Transmission Address Value of Layer x = Second Transmission Source Address Value of Layer x;
    } else {
        First Transmission Address Value of Layer x = Second Transmission Source Address Value of Layer x;
        Second Transmission Address Value of Layer x = First Transmission Source Address Value of Layer x;
    }
} else {
    if (First Replacing Control Bit of Layer x == 0) {
        First Transmission Address Value of Layer x = First Transmission Source Address Value of Layer x;
        Second Transmission Address Value of Layer x = Second Transmission Source Address Value of Layer x;
    } else {
        First Transmission Address Value of Layer x = First Transmission Source Address Value of Layer x + 1;
        Second Transmission Address Value of Layer x = Second Transmission Source Address Value of Layer x + 1;
    }
}
```

EP 4 661 351 A1

# FIG. 6A

# FIG. 6B

# FIG. 7

Start with m = 1 and x = L - 1

Convert m-th Transmission Bit String of
Layer x + 1 into m-th Transmission Shaping Bit String of Layer x + 1 — ST1

Convert m-th Transmission Shaping Bit String of
Layer x + 1 into (2m-1)-th and
2m-th Transmission Source Address Bit Strings of Layer x — ST2

Generate (2m-1)-th and 2m-th Transmission Address Bit Strings of
Layer from (2m-1)-th and
2m-th Transmission Source Address Bit Strings of
Layer x and m-th Transmission Address Replacing Bit of Layer x — ST3

Generate (2m-1)-th Transmission Shaping Bit String of
Layer x from (2m-1)-th Transmission Address Bit String of
Layer x and (2m-1)-th Transmission Information Bit String of Layer x — ST4

Generate 2m-th Transmission Shaping Bit String of
Layer x from 2m-th Transmission Address Bit String of Layer x and
2m-th Transmission Information Bit String of Layer x — ST5

ST6
Is m Equal to n[x]? — NO — ST7 — m = m + 1

YES

ST8
Is x Equal to 1? — NO — ST9 — x = x - 1

YES

END

## FIG. 8A

Processing Circuit
100

## FIG. 8B

Processor
101

Memory
102

FIG. 9

# FIG. 10

First Reception
Shaping Bit String of
Layer x + 1

First Reception
Address Bit String of
Layer x

53

51

ACLUT
[x][1]

LUT
[x][1]

First Reception
Shaping Bit String of Layer x

55

54

LUT
[x+1][1]

52

LUT
[x][2]

Second Reception
Shaping Bit String of Layer x

Second Reception
Address Bit String of Layer x

Reception
Information
Bit String

EP 4 661 351 A1

# FIG. 11A

# FIG. 11B

# FIG. 12

Start with m = 1 and x = 1

Convert (2m-1)-th Reception Shaping Bit String of Layer x into (2m-1)-th Reception Address Bit String of Layer x and (2m-1)-th Reception Information Bit String of Layer x  ~ST11

Convert 2m-th Reception Shaping Bit String of Layer x into 2m-th Reception Address Bit String of Layer x and 2m-th Reception Information Bit String of Layer x  ~ST12

Convert (2m-1)-th Reception Address Bit String of Layer x into (2m-1)-th Post-Conversion Reception Address Bit String of Layer x  ~ST13

Add (2m-1)-th Post-Conversion Reception Address Bit String of Layer x and 2m-th Reception Address Bit String of Layer x, and Convert Result into m-th Reception Shaping Bit String of Layer x + 1  ~ST14

Is m Equal to n[x]?  ST15

NO → m = m + 1  ST16

YES

Is x Equal to L - 1?  ST17

NO → x = x + 1  ST18

YES

Convert First Reception Shaping Bit String of Layer x + 1 (= L) into First Information Bit String of Layer L  ~ST19

END

# FIG. 13A

500

Processing Circuit

# FIG. 13B

501

Processor

502

Memory

# FIG. 14

## FIG. 15

```
if (First Reception Address Value of Layer x > Second Reception Address Value of Layer x) {
    First Replacing Control Bit of Layer x = 0;
    First Reception Source Address of Layer x = First Reception Address of Layer x;
    Second Reception Source Address of Layer x = Second Reception Address of Layer x;
} else if (First Reception Address Value of Layer x < Second Reception Address Value of Layer x) {
    First Replacing Control Bit of Layer x = 1;
    First Reception Source Address of Layer x = Second Reception Address of Layer x;
    Second Reception Source Address of Layer x = First Reception Address of Layer x;
} else {/* When First and Second Reception Address Values of Layer x Are Equal */
    if (First and Second Reception Address Values of Layer x == Even Numbers) {
            First Replacing Control Bit of Layer x = 0;
            First Reception Source Address Value of Layer x = First Reception Address Value of Layer x;
            Second Reception Source Address Value of Layer x = Second Reception Address Value of Layer x;
        } else {/* When First and Second Reception Address Values of Layer x Are Odd Numbers */
            First Replacing Control Bit of Layer x = 1;
            First Reception Source Address Value of Layer x = First Reception Address Value of Layer x - 1;
            Second Reception Source Address Value of Layer x = Second Reception Address Value of Layer x -1;
    }
}
```

EP 4 661 351 A1

## INTERNATIONAL SEARCH REPORT

| International application No. |
|---|
| **PCT/JP2023/008945** |

**A. CLASSIFICATION OF SUBJECT MATTER**

*H04L 27/38*(2006.01)i
FI:   H04L27/38

According to International Patent Classification (IPC) or to both national classification and IPC

**B. FIELDS SEARCHED**

Minimum documentation searched (classification system followed by classification symbols)

H04L27/38

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

IEEE Xplore

**C. DOCUMENTS CONSIDERED TO BE RELEVANT**

| Category* | Citation of document, with indication, where appropriate, of the relevant passages | Relevant to claim No. |
|---|---|---|
| A | FERREIRA, M. Ricardo et al. Rate Adaptability Using LUT-Based Distribution Matching for Probabilistic Constellation Shaping. IEEE Photonics Technology Letters (vol. 33, issue 3, 01 February 2021). 18 December 2020 <br> section II, fig. 2 | 1-9 |
| A | JP 2022-521864 A (CIENA CORPORATION) 13 April 2022 (2022-04-13) <br> fig. 7 | 1-9 |
| A | US 2019/0158238 A1 (NOKIA TECHNOLOGIES OY) 23 May 2019 (2019-05-23) <br> fig. 10 | 1-9 |
| A | US 2020/0287756 A1 (NOKIA SOLUTIONS AND NETWORKS OY) 10 September 2020 (2020-09-10) <br> fig. 4A, 4B, 4C, 4D | 1-9 |
| A | JP 2021-111864 A (FUJITSU LIMITED) 02 August 2021 (2021-08-02) <br> entire text, all drawings | 1-9 |
| A | JP 2022-44962 A (FUJITSU LIMITED) 18 March 2022 (2022-03-18) <br> entire text, all drawings | 1-9 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 May 2023** | **23 May 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

# EP 4 661 351 A1

**INTERNATIONAL SEARCH REPORT**
**Information on patent family members**

International application No.

**PCT/JP2023/008945**

| Patent document cited in search report | | | Publication date (day/month/year) | Patent family member(s) | | | Publication date (day/month/year) |
|---|---|---|---|---|---|---|---|
| JP | 2022-521864 | A | 13 April 2022 | US fig. 7 CN | 10587358 111869137 | B1 A | |
| US | 2019/0158238 | A1 | 23 May 2019 | CN fig. 10 | 111373673 | A | |
| US | 2020/0287756 | A1 | 10 September 2020 | EP fig. 4A, 4B, 4C, 4D CN | 3706379 111669343 | A1 A | |
| JP | 2021-111864 | A | 02 August 2021 | US entire text, all drawings CN | 2021/0218496 113114270 | A1 A | |
| JP | 2022-44962 | A | 18 March 2022 | US entire text, all drawings CN | 2022/0077937 114157365 | A1 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6820131 B